(19) Europäisches Patentamt
European Patent Office
Office européen des brevets

(11) EP 4 028 443 B1

(12) EUROPÄISCHE PATENTSCHRIFT

(45) Veröffentlichungstag und Bekanntmachung des Hinweises auf die Patenterteilung:
**06.03.2024 Patentblatt 2024/10**

(21) Anmeldenummer: **20768610.6**

(22) Anmeldetag: **11.09.2020**

(51) Internationale Patentklassifikation (IPC):
***C08G 18/22*** *(2006.01)* ***C08G 18/20*** *(2006.01)*
***C08G 18/79*** *(2006.01)* ***C08G 18/10*** *(2006.01)*
***C08G 18/76*** *(2006.01)* ***C08F 283/00*** *(2006.01)*
***C08J 5/00*** *(2006.01)* ***C08G 18/00*** *(2006.01)*
***C08G 18/40*** *(2006.01)* ***C08G 18/48*** *(2006.01)*
***C08G 18/32*** *(2006.01)* ***C08G 18/36*** *(2006.01)*
***C08G 18/08*** *(2006.01)* ***B29C 70/16*** *(2006.01)*
***C08J 5/04*** *(2006.01)*

(52) Gemeinsame Patentklassifikation (CPC):
(C-Sets verfügbar)
**C08G 18/225; B29C 70/16; C08F 283/006; C08G 18/003; C08G 18/0885; C08G 18/10; C08G 18/2063; C08G 18/3206; C08G 18/36; C08G 18/4018; C08G 18/4841; C08G 18/7664; C08G 18/797; C08J 5/04; C08J 5/043;** (Forts.)

(86) Internationale Anmeldenummer:
**PCT/EP2020/075447**

(87) Internationale Veröffentlichungsnummer:
**WO 2021/048334 (18.03.2021 Gazette 2021/11)**

(54) **PU-KOMPOSITHARZE**

PU COMPOSITE RESINS

RÉSINES COMPOSITES PU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2019 EP 19197006**

(43) Veröffentlichungstag der Anmeldung:
**20.07.2022 Patentblatt 2022/29**

(73) Patentinhaber: **BASF SE**
**67056 Ludwigshafen am Rhein (DE)**

(72) Erfinder:
- **MEYER, Andre**
  **49448 Lemfoerde (DE)**
- **EMGE, Andreas**
  **49448 Lemfoerde (DE)**
- **FEDDRICH, Laura**
  **49448 Lemfoerde (DE)**

(74) Vertreter: **BASF IP Association**
**BASF SE**
**GBI-C006**
**67056 Ludwigshafen (DE)**

(56) Entgegenhaltungen:
**WO-A1-2017/100991 WO-A1-2017/191216**
**WO-A2-2009/115540**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C08J 2375/04

C-Sets
**C08F 283/006, C08F 222/103;**
**C08G 18/10, C08G 18/48;**
**C08G 18/10, C08G 18/6696**

## Beschreibung

Die Erfindung betrifft einen Faserverbundwerkstoff umfassend die Komponenten (a) ein Polyurethan, erhalten oder erhältlich durch Umsetzung mindestens der Komponenten: (i) eine Polyisocyanatzusammensetzung; (ii) eine Polyolzusammensetzung, umfassend mindestens 15 Gewichts-% eines mindestens dreifunktionellen Alkohols (ii.1), der mindestens zwei primären Hydroxylgruppen aufweist und weniger als 10 Gewichts-% von Polyolen, die eine Propylenoxid und/oder Butylenoxid-basierten Endgruppe aufweisen; und (b) Fasern, welche zumindest teilweise in das kompakte Polyurethan eingebettet vorliegen.

Die Erfindung betrifft weiterhin ein Verfahren zur Herstellung eines Faserverbundwerkstoffes, einen Faserverbundwerkstoff erhalten oder erhältlich nach diesem Verfahren und die Verwendung des Faserverbundwerkstoffes für die Herstellung eines Rohres, insbesondere eines konischen Rohres, eines Rohrverbindungsstückes, eines Druckbehälters, eines Lagertanks, eines Isolators, eines Mastes, eines Stabs, einer Walze, einer Torsionswelle, eines Profils, eines Sportgerätes, eines Formteils, einer Abdeckung, eines Automobil-Außenteiles, eines Seils, eines Taus, einer Isogridstruktur oder eines textilen Halbzeugs.

Faserwickeln (Filament Winding) ist ein Herstellungsverfahren zur Herstellung von rotationssymmetrische Bauteilen. Beim Faserwickeln werden üblicherweise die Fasern als Roving von einer oder mehreren Spule(n) abgezogen, in Harz getränkt und auf einem rotierenden Kern gewickelt. Als Roving wird dabei ein Bündel, Strang oder Multifilamentgarn aus parallel angeordneten Filamenten (Endlosfasern) bezeichnet, der überwiegend in der Fertigung von Faserverbundkunststoffen oder faserverstärkten Kunststoffen, einer Untergruppe der Verbundwerkstoffe, verwendet wird. Grundsätzlich können neben Rovings auch flächige Textilien wie Vliese, Gewebe, Gestricke eingesetzt werden. Nach dem Aufwickeln auf den rotierenden Kern wird das Laminat in einem Ofen ausgehärtet. Mittels Variation von Fasertyp, Wickelwinkel und Schichtdicke können Laminate mit einer weiten Bandbreite erzeugt werden, die in verschiedensten Bereichen zur Anwendung kommen.

Standardmäßige Anforderungen an Formulierungen für Filament Winding sind insbesondere lange offene Zeiten von mehr als 30 Minuten, bevorzugt von mehr als 45 Minuten. Das Reaktionsgemisch darf im offenen Bad, in dem Endlosfasern mit dem jeweiligen Harz imprägniert werden, nicht gelieren. Weiterhin ist essentiell, dass keine Blasenbildung an der Oberfläche durch Lufteinschlüsse während des Wickelprozesses und, insbesondere durch Reaktion von Luftfeuchtigkeit / feuchten Fasern und Isocyanat, auftritt. Daraus folgt, dass übliche Polyurethan(PU)-Formulierungen für solche Harzbäder wenig reaktive Polyole bzw. Katalysatoren verwenden, typischerweise Propylenoxid-gekappte Polyole, d.h. sekundäre Alkohole. Aufgrund der Reaktivität und aufgrund der Hydrophilie ist dabei Propylenoxid (PO) eindeutig bevorzugt gegenüber Ethylenoxid (EO).

Die WO 2016/183073 A1 offenbart ein Verfahren zur Herstellung eines Kompositelements mittels Faserwickeln, wobei Amin-gestartete Polyole eingesetzt werden, deren genaue Zusammensetzung nicht offenbart ist. Die WO 03/085022 A1 beschreibtReaktionssysteme für den Einsatz im Faserwickeln, bei welchem ein organisches polyfunktionales Harz eingesetzt wird, welches aktiven Wasserstoff-enthaltende Isocyanat-reaktive Gruppen aufweist; die eingesetzten Polyole sind nahezu durchgängig PO-basiert.

WO 2017/100991 A1 beschreibt eine Reaktionsmischung aus Filamentwicklungsharz auf Polyurethanbasis, wobei die Reaktionsmischung eine Isocyanatkomponente einschließlich eines oder mehrerer Isocyanate; und eine Isocyanat-reaktive Komponente, einschließlich 5 Gew.-% bis 95 Gew.-% eines oder mehrerer Polyole mit einem zahlenmittleren Molekulargewicht von 50 g/mol bis 8.000 g/mol, von 2 Gew.-% bis 30 Gew.-% von einem oder mehreren auf Propan basierenden Triolen, und von 1 Gew.-% bis 15 Gew.-% von einem oder mehreren Triesterphosphaten, basierend auf dem Gesamtgewicht der Isocyanat-reaktiven Komponente, einem Verhältnis des Gesamtgewichts des einen oder der mehreren Triole auf Propanbasis zu einem Gesamtgewicht von wobei das eine oder die mehreren Triester-Phosphate zwischen 1,1 und 5,0 liegen, umfasst.

WO 2009/115540 A2 bezieht sich auf die Verwendung eines Polyurethansystems, enthaltend a) Polyisocyanate b) mindestens eine mit Isocyanat reaktive Verbindung, c) mindestens ein Carbonsäuresalz eines Aminkatalysators, d) gegebenenfalls weitere Katalysatoren, e) gegebenenfalls einen Reaktivkettenverlängerer mit zumindest zwei gegenüber Isocyanaten reaktiven Gruppen, wobei zumindest eine gegenüber Isocyanaten reaktive Gruppe eine freie, primäre $NH_2$-Gruppe ist, und f) gegebenenfalls weitere Additive, zur Herstellung von Polyurethan-Sandwichteilen, wobei die PolyurethanSandwichteile eine Kernschicht enthalten und die Polyurethansandwichteile durch Kompression der Kernschicht eine dreidimensionale Form erhalten und wobei, bezogen auf ein Äquivalent Amin des Aminkatalysators, 0,5 bis 1 5 Äquivalente Säuregruppen einer Carbonsäure enthalten sind.

Der Einsatz von Ethylenoxid-gekappten Polyolen wird meist vermieden, da dies zu Polyolkomponenten mit kurzen offenen Zeiten führen würde und solch reaktive Harze mit der gängigen Verfahrenstechnik nicht verarbeitbar wären, da das Reaktionsharz nach kurzer Zeit im offenen Imprägnierbad gelieren würde. Kürzere Aushärtezeiten sind allerdings aus ökonomischer Sicht wünschenswert, weiterhin ist eine möglichst geringe Empfindlichkeit gegenüber Feuchtigkeit angestrebt.

Aufgabe der Erfindung war die Bereitstellung von PU-Faserverbundstoffen, bei deren Herstellung kürzere

offene Zeiten möglich sind und deren Harzbestandteile eine geringe Empfindlichkeit bezüglich Feuchtigkeit aufweisen, sowie verkürzte Aushärtungszeiten ermöglichen.

Diese Aufgabe wurde gelöst mit einem Faserverbundwerkstoff umfassend die folgenden Komponenten:

a) ein Polyurethan, erhalten oder erhältlich durch Umsetzung mindestens der Komponenten:

i) eine Polyisocyanatzusammensetzung;
ii) eine Polyolzusammensetzung, umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols (ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen;

b) Fasern, welche zumindest teilweise in das kompakte Polyurethan eingebettet vorliegen.

Überraschenderweise zeigte sich, dass der Einsatz von mindestens 15 Gewichts-% eines mindestens dreifunktionellen Alkohols (ii.1), der mindestens zwei primären Hydroxylgruppen, bevorzugt drei primäre Hydroxylgruppen aufweist, d.h. Polyolen, welche reaktive primäre Hydroxylgruppen aufweisen, wobei die Polyolzusammensetzung weniger als 10 Gewichts-% von Polyolen, die eine Propylenoxid und/oder Butylenoxid-basierten Endgruppe aufweisen, enthält, beim Faserwickeln (im Wickelversuch) zu deutlich besseren Ergebnissen im Hinblick auf die Vermeidung einer unerwünschten Blasenbildung führte. So zeigten Polyurethane auf Basis von mindestens 15 Gewichts-% an mindestens dreifunktionellem Alkohol (ii.1), der mindestens zwei primären Hydroxylgruppen, bevorzugt drei primäre Hydroxylgruppen aufweist, beim Fadenwickeln trotz hoher Luftfeuchtigkeit von 85 % keine bis maximal eine sehr geringe Blasenbildung, wohingegen der Einsatz von weniger als 15 Gewichts-% an mindestens dreifunktionellem Alkohol (ii.1), der mindestens zwei primären Hydroxylgruppen, bevorzugt drei primäre Hydroxylgruppen aufweist, zum Schäumen führte, d.h. sich unerwünschte Blasen an der Bauteiloberfläche bildeten. Nahezu für alle betrachteten mechanischen Eigenschaften zeigten sich Vorteile beim Einsatz eines mindestens dreifunktionellen Alkohols (ii.1), der mindestens zwei primären Hydroxylgruppen, bevorzugt drei primäre Hydroxylgruppen aufweist, insbesondere bei der Schlagzähigkeit.

Das Polyurethan gemäß (a) ist ein kompaktes Polyurethan, welches eine Dichte von ≥ 850 g/l, bevorzugt im Bereich von 1000 bis 1500 g/l (L. J.Gibson M.F.Ashby Cellular solids, Cambridge press, 2. Auflage, 1997, Seiten 54-56), weiter bevorzugt im Bereich von 1000 bis 1300 g/l, aufweist, wobei die Dichte gemäß DIN EN ISO 1183-1 (September 2019) per Auftriebsverfahren bestimmt ist. Alle Angaben zur Dichte des kompakten Polyurethans bezieht sich jeweils auf das Polyurethan Reinharz, ohne Berücksichtigung von Füllstoffen. Werden entsprechend der nachstehend folgenden Erläuterungen zu (ii.1.4) Füllstoffe verwendet, verändern sich die angegebenen Dichten der erfindungsgemäßen Polyurethane entsprechend der Menge und der Dichte der verwendeten Füllstoffe.

Geringe Mengen an Treibmittel, beispielsweise Wasser, das herstellungsbedingt in den Polyolen enthalten ist, sind dabei im Rahmen der vorliegenden Erfindung nicht als Treibmittelzugabe zu verstehen. Vorzugsweise enthalt die Reaktionsmischung zur Herstellung des kompakten Polyurethans weniger als 0,2 Gewichts-%, besonders bevorzugt weniger als 0,1 Gewichts-% und insbesondere weniger als 0,05 Gewichts-% Wasser.

Der mindestens dreifunktionelle Alkohol (ii.1), der mindestens zwei primären Hydroxylgruppen, bevorzugt drei primäre Hydroxylgruppen aufweist, ist bevorzugt ausgewählt aus der Gruppe bestehend aus Trimethylolpropan (TMP), Butan-1,2-4-triol, Pentan-1,3,5-triol, 3-(Hydroxymethyl)pentan-1 ,2,5-triol, Heptan-1,4,7-triol, Umsetzungsprodukten von Phenolderivaten mit mindestens 2 Äquivalenten Formaldehyd, Glycerin, Pentaerythrit, Sorbitol, Mannitol, Erythrol, Erythrulose, Ribulol, Ribulose, Xylulol, Xylulose, Fructose, Sorbose, Tagatose, Psicose und ethoxyliertem Polyetherpolyol; weiter bevorzugt aus der Gruppe bestehend aus Trimethylolpropan (TMP), Butan-1,2-4-triol, Pentan-1,3,5-triol, 3-(Hydroxymethyl)pentan-1 ,2,5-triol, Heptan-1,4,7-triol, Umsetzungsprodukten von Phenolderivaten mit mindestens 2 Äquivalenten Formaldehyd und ethoxyliertem Polyetherpolyol; weiter bevorzugt aus der Gruppe bestehend aus Trimethylolpropan (TMP), Butan-1,2-4-triol, Pentan-1,3,5-triol, 3-(Hydroxymethyl)pentan-1 ,2,5-triol, Heptan-1,4,7-triol und ethoxyliertem Polyetherpolyol.

Erfindungsgemäß wird gemäß (i) eine Polyisocyanatzusammensetzung eingesetzt. Als Di- oder Polyisocyanate (i) können alle zur Herstellung von Polyurethanen bekannten aliphatischen, cycloaliphatischen oder aromatischen Isocyanaten sowie beliebige Mischungen daraus, eingesetzt werden. Die Polyisocyanatzusammensetzung enthält dabei mindestens ein Polyisocyanat. Erfindungsgemäß kann die Polyisocyanatzusammensetzung auch zwei oder mehr Polyisocyanate enthalten. Das mindestens eine Polyisocyanat ist bevorzugt mindestens ein Diisocyanat, weiter bevorzugt ausgewählt aus der Gruppe bestehend aus aliphatischen, cycloaliphatischen, araliphatischen, aromatischen Diisocyanaten und Mischungen von zwei oder mehr dieser Diisocyanate. Im Einzelnen seien beispielhaft die folgenden aromatischen Diisocyanate genannt: 2,4-Toluol-diisocyanat, Gemische aus 2,4- und 2,6-Toluol-diisocyanat, 4,4'-, 2,4'- und/oder 2,2'-Diphenylmethan-diisocyanat (MDI), Gemische aus 2,4'- und 4,4'--Diphenylmethan-diisocyanat, urethan-,

carbodiimid- oder uretonim-modifizierte flüssige 4,4'- - und/oder 2,4-Diphenylmethan-diisocyanate, 4,4'-Diisocyanatodiphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten. Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat oder Oligomere oder Prepolymere dieser Isocyanate. Bevorzugt sind Isocyanatzusammensetzungen, die MDI enthalten.

Vorzugsweise werden als Di- oder Polyisocyanate (i) Isocyanate auf Basis des Diphenylmethandiisocyanats, beispielsweise 2,4'-MDi, 4,4'-MDI oder Mischungen dieser Komponenten, gegebenenfalls auch mit höherkernigen Homologen des MDI, eingesetzt.

Vorzugsweise weist das Di- und Polyisocyanate (a) eine Funktionalität von 2,0 bis 2,9, besonders bevorzugt 2,0 bis 2,8 auf.

Di- und Polyisocyanate der Polyisocyanatzusammensetzung (i) können auch in Form von Polyisocyanatprepolymeren eingesetzt werden. Diese Polyisocyanatprepolymere sind erhältlich, indem vorstehend beschriebene Polyisocyanate (i) im Überschuss, beispielsweise bei Temperaturen von 30 bis 100 °C, bevorzugt bei etwa 80 °C, mit Verbindungen mit mindestens zwei gegenüber Isocyanaten reaktiven Gruppen, zum Prepolymer umgesetzt werden. Der NCO-Gehalt erfindungsgemäßer Polyisocyanatprepolymere beträgt vorzugsweise von 15 bis 33 Gew.-% NCO, besonders bevorzugt von 25 bis 30 Gew.-% NCO. Die Viskosität der Di- oder Polyisocyanate oder Polyisocyanatprepolymere (i) bei 25 °C nach DIN 53019-1 bis 3 liegt dabei vorzugsweise zwischen 5 und 1000 mPas, weiter bevorzugt zwischen 5 und 700 mPas und besonders bevorzugt zwischen 10 und 400 mPas. Besonders bevorzugt weisen die Di- und/oder Polyisocyanate (i) mindestens 50, mehr bevorzugt mindestens 70 mol-% Isocyanate mit einer Funktionalität von 2 auf.

In einer Ausführungsform umfasst der Faserverbundwerkstoff die folgenden Komponenten:

a) ein Polyurethan, erhalten oder erhältlich durch Umsetzung mindestens der Komponenten:

  i) eine Polyisocyanatzusammensetzung;
  ii) eine Polyolzusammensetzung, umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols (ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen;

b) Fasern, welche zumindest teilweise in das kompakte Polyurethan eingebettet vorliegen,

wobei der mindestens dreifunktionelle Alkohol (ii.1) ein alkoxyliertes Polyetherpolyol ist, bei welchem mindestens eine endständige Alkoxy-Gruppe auf Ethylenoxid basiert.

Ein alkoxyliertes Polyetherpolyol, bei welchem mindestens eine endständige Alkoxy-Gruppe auf Ethylenoxid basiert, meint ein Polyetherpolyol umfassend eine endständige Struktureinheit $-[O-CH_2-CH_2]_p-OH$, wobei p eine ganze Zahl aus dem Bereich von 1 bis 6 ist. Bevorzugt meint das alkoxyliertes Polyetherpolyol, bei welchem mindestens eine endständige Alkoxy-Gruppe auf Ethylenoxid basiert, ein Polyetherpolyol umfassend eine endständige Struktureinheit $-[O-CHR-CH_2]_{p'}-[O-CH_2-CH_2]_p-OH$, wobei p eine ganze Zahl aus dem Bereich von 1 bis 6 ist, p' Null oder eine ganze Zahl aus dem Bereich von 1 bis 6 und R jeweils unabhängig für jede der p' Wiederholungseinheiten unabhängig ausgewählt ist aus Methylgruppe und Ethylgruppe.

In einer Ausführungsform umfasst der Faserverbundwerkstoff die folgenden Komponenten:

a) ein Polyurethan, erhalten oder erhältlich durch Umsetzung mindestens der Komponenten:

  i) eine Polyisocyanatzusammensetzung;
  ii) eine Polyolzusammensetzung, umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);

b) Fasern, welche zumindest teilweise in das kompakte Polyurethan eingebettet vorliegen.

In einer Ausführungsform des Faserverbundwerkstoffs ist das ethoxylierte Polyetherpolyol (ii.1) erhalten oder

erhältlich durch Umsetzung von:

ii.1.1) einem Polyol-Starter mit einer Funktionalität von 3 bis 6, bevorzugt 3 oder 4,
mit
ii.1.2) Ethylenoxid,
in Gegenwart eines Alkoxylierungs-Katalysators (ii.1.3);
ii.1.4) gegebenenfalls weiteren Hilfs- und/oder Zusatzstoffen.

In einer Ausführungsform des Faserverbundwerkstoffs weist das ethoxylierte Polyetherpolyol (ii.1) ein Äquivalentmolekulargewicht von weniger als 200 g/mol, bevorzugt im Bereich von 50 bis 140 g/mol, weiter bevorzugt im Bereich von 55 bis 135 g/mol, weiter bevorzugt im Bereich von 60 bis 130 g/mol, auf.

Unter einem "Polyol mit einer Funktionalität von 3 bis 6" wird ein Polyol verstanden, welches im Mittel pro Molekül im Bereich von 2,8 bis 3,0 bzw. im Bereich von 3,8 bis 4,0 bzw. im Bereich von 4,8 bis 5,0 bzw. im Bereich von 5,8 bis 6,0 Hydroxylgruppen aufweist. Ebenso wird unter einem "Polyol mit einer Funktionalität von 3 oder 4" ein Polyol verstanden, welches im Mittel pro Molekül im Bereich von 2,8 bis 3,0 bzw. im Bereich von 3,8 bis 4,0 Hydroxylgruppen aufweist. In der Praxis wird von der nominalen Funktionalität abgewichen, da verschiedene Nebenreaktionen während der Polyol-Synthese zu einer Funktionalität führen können, die real niedriger sein kann als nominal angenommen (M. Ionescu, Chemistry and Technology of Polyols, Rapra, 2005, S. 67-75). Im Bereich des Äquivalentmolekulargewichts von weniger als 200 g/mol wird davon ausgegangen, dass die Funktionalität sehr nahe bei 3 bzw. 4 bzw. 5 bzw. 6, bevorzugt sehr nahe bei 3 bzw. 4, liegt. Das Äquivalentmolekulargewicht (ÄMG) ist definiert als der Quotient aus Molekulargewicht des Polyetherpolyols (M(Polyetherpolyol) und Funktionalität (F) des Polyetherpolyols:

$$\text{ÄMG} = \text{M(Polyetherpolyol)} / \text{F [g]}$$

Alkoxylierungs-Katalysatoren (ii.1.3) sind dem Fachmann bekannt. Eingesetzt werden basische Katalysatoren wie Alkalisalze, beispielsweise Natriummethanolat, Natriumhydroxid, Kaliumhydroxid und/oder Caesiumhydroxid, Amine wie beispielsweise Imidazolderivate oder Lewis-Säure-Katalysatoren, beispielsweise Bor-basierte fluorhaltigen Lewis-Säure-Katalysatoren wie $BF_3$ oder Trispentafluorphenylboran.

In einer Ausführungsform des Faserverbundwerkstoffs weist das ethoxylierte Polyetherpolyol (ii.1) eine Hydroxylzahl von mehr als 300 mg KOH/g, bevorzugt von mehr als 450 mg KOH/g, weiter bevorzugt eine Hydroxylzahl im Bereich von 300 bis 1400 mg KOH/g, weiter bevorzugt im Bereich von 450 bis 1300 mg KOH/g, weiter bevorzugt im Bereich von 450 bis 1260 mg KOH/g, auf.

In einer Ausführungsform des Faserverbundwerkstoffs wird das ethoxylierte Polyetherpolyol (ii.1) in 15 bis 100 Gewichts-%, bevorzugt in 20 bis 100 Gewichts-%, weiter bevorzugt in 25 bis 75 Gewichts-%, weiter bevorzugt in 30 bis 50 Gewichts-%, bezogen auf ein Gesamtgewicht der Polyolzusammensetzung (ii) von 100 Gewichts-%, eingesetzt.

In einer Ausführungsform des Faserverbundwerkstoffs weist das ethoxylierte Polyetherpolyol (ii.1) keine auf Propylenoxid-basierte Endgruppen und/oder Butylenoxid-basierte Endgruppen auf, bevorzugt weist das ethoxylierte Polyetherpolyol (ii.1) ausschließlich auf Ethylenoxid-basierte Endgruppen auf. In einer Ausführungsform des Faserverbundwerkstoffs weist das ethoxylierte Polyetherpolyol (ii.1) ausschließlich Ethylenoxid-basierte Gruppen auf und enthält keine auf Propylenoxid-basierte Gruppen und/oder Butylenoxid-basierte Gruppen.

In einer Ausführungsform des Faserverbundwerkstoffs umfasst der Polyol-Starter (ii.1.1) des ethoxylierten Polyetherpolyols (ii.1) ein Triol mit einer Funktionalität von 3, bevorzugt ein Triol der Formel (I)

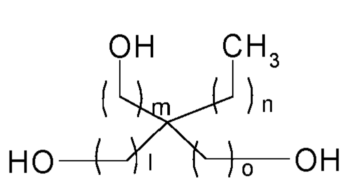

(I)

, wobei l, m, n und o jeweils unabhängig voneinander eine ganze Zahl aus dem Bereich von 1 bis 6 sind. Bevorzugt sind l, m, n und o des mindestens einen Triols (ii.1.1) der Formel (I) jeweils unabhängig voneinander eine ganze Zahl aus dem Bereich von 1 bis 3, weiter bevorzugt sind l, m, n und o alle 1.

Das Triol (ii.1.1) weist bevorzugt eine Hydroxylzahl im Bereich von 200 bis 2000 mg KOH/g, bevorzugt im Bereich von 250 bis 1850 mg KOH/g, weiter bevorzugt im Bereich von 300 bis 1850 mg KOH/g, auf.

In einer Ausführungsform des Faserverbundwerkstoffs ist das ethoxylierte Polyetherpolyol (ii.1) nur durch die Umsetzung eines Polyol-Starters (ii.1.1.), insbesondere eines Triols der Formel (I), und Etylenoxid (ii.1.2) erzeugt und kein weiteres Alkylenoxid wird eingesetzt.

In einer Ausführungsform des Faserverbundwerkstoffs wird das durch die Umsetzung eines Polyol-Starters (ii.1.1.), insbesondere eines Triols der Formel (I), und Etylenoxid (ii.1.2) erzeugte ethoxylierte Polyetherpolyol (ii.1) verwendet in Kombination mit einem oder mehreren Triol(en) mit mind. 2 primären Hydroxylgruppen. Als das/die Triol(e), die hierbei eingesetzt werden, werden die oben beschriebenen mindestens dreifunktionellen Alkohole (ii.1), die mindestens zwei primären Hydroxylgruppen, bevorzugt drei primäre Hydroxylgruppen aufweisen - mit Ausnahme des ethoxylierten Polyetherpolyols - verwendet.

In einer Ausführungsform des Faserverbundwerkstoffs ist das ethoxylierte Polyetherpolyol (ii.1) nur durch die Umsetzung eines Polyol-Starters (ii.1.1.), insbesondere Triols der Formel (I), und Etylenoxid (ii.1.2) erzeugt und kein weiterer Starter, insbesondere kein Aminbasierter Starter, wird eingesetzt. "Aminbasierter Starter" umfasst Verbindungen die eine oder mehrere primäre, sekundäre und/oder tertiäre Amingruppe(n) enthalten. Umfasst sind davon primäre Aminverbindungen wie beispielsweise Ethanolamin, sekundäre Aminverbindungen wie Diethanolamin, Oligoamine mit primären Amingruppen wie beispielsweise Isophoronadiamin, Diaminotoluol, Diaminohexan, Diaminodiphenylmethan, Diaminodicyclohexylmethan oder Ethylendiamin, tertiäre Aminverbindungen wie beispielsweise Triethanolamin oder Triethylamin oder Polyamine mit primären Amingruppen.

In einer Ausführungsform des Faserverbundwerkstoffs basiert das ethoxylierte Polyetherpolyol (ii.1) auf einem Triol, bevorzugt auf einem Triol (ii.1.1) der Formel (I) wie voranstehend beschrieben, und weist bevorzugt die Formel (II) auf,

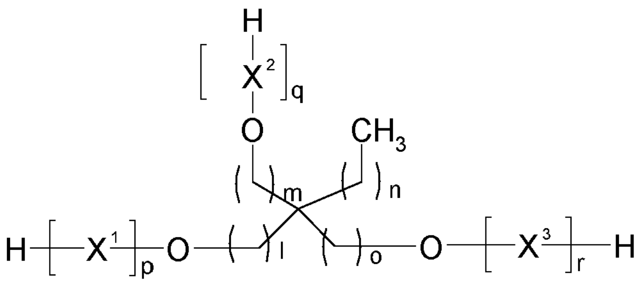

(II)

, wobei

l, m, n und o jeweils unabhängig voneinander eine ganze Zahl aus dem Bereich von 1 bis 6 sind, bevorzugt l, m, n und o alle 1 sind;
p, q und r jeweils unabhängig voneinander Null oder eine ganze Zahl aus dem Bereich von 1 bis 6 sind;
und $X^1$, $X^2$ und $X^3$ jeweils eine $-CH_2-CH_2-O-$Gruppe sind.

Bevorzugt umfasst die Polyolzusammensetzung (ii) kein Polyol, welches auf einem Aminbasierten Starter basiert.

In einer Ausführungsform des Faserverbundwerkstoffs ist das Polyurethan (a) ohne Einsatz eines Polyols erhältlich oder erhalten, welches auf einem Aminbasierten Starter basiert.

Bevorzugt umfasst die Polyolzusammensetzung gemäß (ii) ein oder mehrere weitere Polyole zusätzlich zum mindestens einen ethoxylierte Polyetherpolyol (ii.1) wobei das/die weitere(n) Polyol(e) ausgewählt sind aus der Gruppe der Polyesterpolyole, weiter bevorzugt aromatische Polyesterpolyole oder fettchemische Polyole. Das mindestens eine Polyesterpolyol, bevorzugt das aromatische Polyesterpolyol oder das fettchemische Polyol, weist bevorzugt eine Funktionalität auf im Bereich von 2 bis 3, weiter bevorzugt im Bereich von 2,4 bis 3.

Polyesterole werden beispielsweise hergestellt durch Polykondensation aus aliphatischen oder aromatischen Dicarbonsäurederivaten und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere Möglichkeit bestehen in der ringöffnende Polymerisation von cyclischen Estern (beispielsweise ε-Caprolacton oder Hydroxycarbonsäuren, beispielsweise ω-Hydroxycapronsäure) oder Carbonaten sowie in der Transesterifikation von Polyesterolen mit mehrwertigen Alkoholen. Weitere mögliche Polyole sind beispielsweise im "Kunststoffhandbuch, Band 7, Polyurethane", Carl Hanser Verlag, 3. Auflage 1993, Kapitel 3.1 angegeben. Vorzugsweise werden mehrfunktionelle Alkohole, bevorzugt Diole mit 2 bis 12 Kohlenstoffatomen, weiter bevorzugt 2

bis 6 Kohlenstoffatomen, umgesetzt mit mehrfunktionellen Carbonsäuren mit 2 bis 12 Kohlenstoffatomen beispielsweise Bernsteinsäure, Glutarsäure, Adipinsäure, Korksäure, Azelainsäure, Sebacinsäure, Decandicarbonsäure, Maleinsäure, Fumarsäure, und vorzugsweise Phthalsäure, Isophthalsäure, Terephthalsäure und die isomeren Naphthalindicarbonsäuren. Die Dicarbonsäuren können sowohl einzeln als auch im Gemisch untereinander verwendet werden. Hierbei ist es möglich, die Polykondensation in Gegenwart von Fettsäuren wie beispielsweise Ölsäure oder Ricinolsäure durchzuführen. Beispiele für zwei- oder mehrwertige Alkohole sind: Ethandiol, Diethylenglykol, 1,2- bzw. 1,3-Propandiol. Dipropylenglykol, 1,4- bzw. 1,2-Butandiol, 1,5-Pentandiol, 1,6-Hexandiol, 1,10-Decandiol, Glycerin und Trimethylolpropan.

Die Polyesterole besitzen bevorzugt eine Funktionalität zwischen 1,8 und 4, bevorzugt 2 bis 3 und ein zahlenmittleres Molekulargewicht von 3480 bis 3000, vorzugsweise 480 bis 3000 g/mol. Sie weisen ferner eine Säurezahl kleiner 10, bevorzugt kleiner 2 auf.

Zur Herstellung der Polyesterpolyole können die organischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie beispielsweise Stickstoff, Kohlenmonoxid, Helium, oder Argon in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie beispielsweise Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Bevorzugte eingesetzte Polyesterole sind aromatische Polyesterole und fettchemische Polyesterole. Beispiele für fettchemische Polyole sind u.a. beschrieben in M. Ionescu, Chemistry and Technology of Polyols, Rapra, 2005, Kapitel 17.1. Vorzugsweise wird eine hydroxylfunktionalisierte fettchemische Verbindung, d.h. ein fettchemisches Polyol, eingesetzt. Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. In einer Ausführungsform des fettchemischen Polyols werden das Rizinusöl (Triglycerid-Gemisch) und dessen Derivate eingesetzt. Bevorzugte Derivate sind Umsetzungsprodukte mit Alkylenoxiden oder Keton-FormaldehydHarzen. Letztgenannte Verbindungen werden beispielsweise von der Covestro AG unter der Bezeichnung Desmophen® 1150 vertrieben. Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxidierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma BASF (als Sovermol®) bzw. der Firma Altropol Kunststoff GmbH als Neukapol® angeboten.

In einer Ausführungsform des kompakten Polyurethans umfasst die Polyolzusammensetzung (ii) optional Polyetherole, die beispielsweise hergestellt werden aus Epoxiden, wie Propylenoxid und/oder Ethylenoxid und/oder Butylenoxid mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in WO 2006/034800 A1, EP 0090444 B1 oder WO 05/090440 A1 beschrieben. Bevorzugt sind in der Komponente (ii) weniger als 10% Polyetherole enthalten, die durch Umsetzung von mehrfunktionellen Alkoholen mit Propylenoxid und/oder Ethylenoxid und/oder Butylenoxid erhalten werden und sekundäre OH-Gruppen aufweisen.

Weiterhin kann die Polyolzusammensetzung gemäß (ii) dem Fachmann bekannte Polyoltypen umfassen, wie Polybutadiene, auf Basis radikalisch oder anionisch polymerisierter Butadiene, Acrylatpolyole, Polysiloxanpolyole, Polyole erhältlich durch Mannichkondensation, aromatische Polyole, beispielsweise auf Basis Bisphenol A, Resorcinol, Novolak

oder Melamin. Weitere Möglichkeiten sind Polytetrahydrofurane bzw. Polycaprolactone bzw. Copolymere aus diesen Ausgangsstoffe. Weitere Möglichkeiten sind Polymerpolyole, beispielsweise aus Basis von Triolen und Partikeln auf Basis Polystyrol, Styrol/Acrylnitril oder Polyacrylat/Polymethacrylat. Alle diese Polyoltypen sind bekannt beispielsweise aus M. Ionescu, Chemistry and Technology of Polyols, Rapra, 2005, S. 67-75.

In einer Ausführungsform des kompakten Polyurethans umfasst die Polyolzusammensetzung (ii) optional Kettenverlängerer. Als Kettenverlängerer werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Monoethylenglykol, 1,2-Propandiol ,1,3-Propandiol, 2-Methyl-1,3-Propandiol, 1,10-Decandiol, 1,2-, 1,3-, 1,4-Dihydroxycyclohexan, Diethylenglykol, Dipropylenglykol, Tripropylenglykol, 1,4-Butandiol, 1,2-Butandiol, 1,6-Hexandiol und Bis-(2-hydroxyethyl)-hydrochinon (HQEE), Bisphenol-A-bis(hydroxyethylether), Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

In Betracht kommen ferner aminische Kettenverlängerer wie beispielsweise Diethyltoluoldiamin (DEDTA), m-Phenylendiamin, Diethanolamin, oder Triethanolamin. Besonders bevorzugt werden als Kettenverlängerer Monoethylenglycol, 1,4-Butandiol, 1,2-Butandiol, Diethylengylcol, Glycerin oder Mischungen davon eingesetzt. Werden Kettenverlängerer und/oder Vernetzer eingesetzt, beträgt der Anteil der Kettenverlängerer und/ oder Vernetzer üblicherweise 1 bis 50, vorzugsweise 2 bis 20 Gew.-%, bezogen auf das Gesamtgewicht der Komponenten der Polyolzusammensetzung (ii). Dabei kann jedoch auch auf das Kettenverlängerungs- oder Vernetzungsmittel verzichtet werden. Zur Modifizierung der mechanischen Eigenschaften, beispielsweise der Härte, kann sich allerdings der Zusatz von Kettenverlängerungsmitteln, Vernetzungsmitteln oder gegebenenfalls auch Gemischen davon als vorteilhaft erweisen.

Die Polyolzusammensetzung (ii) enthält erfindungsgemäß weniger als 10 Gewichts-% von Polyolen, die eine Propylenoxid und/oder Butylenoxid-basierten Endgruppe aufweisen, wobei die Polyolzusammensetzung (ii) bevorzugt keine Polyole enthält, die eine Propylenoxid-Endgruppe oder Butylenoxid-Endgruppe aufweisen. Bevorzugt enthält die die Polyolzusammensetzung (ii) weniger als 10 Gewichts-% von Polyolen, die eine Propylenoxid und/oder Butylenoxidgruppe aufweisen. Weiter bevorzugt enthält die Polyolzusammensetzung (ii) keine Polyole, die eine Propylenoxid- oder Butylenoxidgruppe aufweisen und/oder keine auf Propylenoxid und/oder Butylenoxid-basierten Polyole und/oder keine Kettenverlängerer mit sekundären OH-Gruppen.

In einer Ausführungsform des Faserverbundwerkstoffs umfasst die Polyolzusammensetzung (ii) mindestens einen Reaktivverdünner, bevorzugt zu 5 bis 50 Gewichts-%, bezogen auf das Gesamtgewicht der Polyolzusammensetzung (ii), wobei der mindestens eine Reaktivverdünner bevorzugt eine Substanz mit mindestens einer olefinischen Gruppe, bevorzugt eine Substanz mit mindestens 2 olefinischen Gruppen, weiter bevorzugt eine Substanz mit mindestens einer endständigen olefinischen Gruppe, weiter bevorzugt mindestens 2 endständigen olefinischen Gruppen, enthält. Substanzen mit endständigen olefinischen Gruppen sind bevorzugt ausgewählt aus der Gruppe der Allylether; der Vinylether; der Acrylate, der Methacrylate, weiter bevorzugt aus der Gruppe von Butandioldiacrylat, Butandioldimethacrylat und Mischungen von Butandioldiacrylat und Butandioldimethacrylat; der Ethylenglyokol-basierten Acrylate, bevorzugt der oligomeren oder polymeren Ethylenglykol-Acrylate ; der Propylenglyokol-basierten Acrylate, bevorzugt der oligomeren oder polymeren Propylenglykol-basierten Acrylate ; der Bisphenol A-basierten Acrylate, Bisphenol F-basierten Acrylate, Glycerin- basierten Acrylate, oligomeres Glycerin- basierten Acrylate, Trimethylolpropan- basierten Acrylate, Di-Trimethylolpropanbasierten Acrylate, Pentaerythrit- basierten Acrylate, Isocyanurat- basierten Acrylate, Hexahydrotriazin- basierten Acrylate, und Methacrylate, wobei jeweils mindestens eine, bevorzugt mehr als eine Acrylat-, Methacrylat-, Allylether- oder Vinylethergruppe, weiter bevorzugt jeweils mindestens eine, weiter bevorzugt mehr als eine endständige Acrylat-, Methacrylat-, Allylether- oder Vinylethergruppe enthalten ist.]

In einer Ausführungsform des Faserverbundwerkstoffs enthält das Polyurethan ein Epoxidharz, bevorzugt in 1 bis 50 Gewichts-%, bevorzugt in 5 bis 25 Gewichts-%, jeweils bezogen auf das Gesamtgewicht der Polyolzusammensetzung (ii).

Als Polyepoxide sind niedrigviskose aliphatische, cycloaliphatische oder aromatische Epoxide sowie deren Mischungen besonders gut geeignet. Die Polyepoxide können durch Umsetzung von Epoxiden, beispielsweise Epichlorhydrin, mit Alkoholen dargestellt werden. Als Alkohole können beispielsweise Bisphenol A, Bisphenol F, Bisphenol S, Cyclohexandimethanol, Phenol-Formaldehyd-Harze, Kresol-Formaldehyd-Novolake, Butandiol, Hexandiol, Trimethylolpropan oder Polyetherpolyole eingesetzt werden. Es können auch Glycidylester, beispielsweise von Phthalsäure, Isophthalsaure oder Terephthalsaure sowie deren Mischungen eingesetzt werden. Epoxide können auch durch die Epoxidierung von Doppelbindungen enthaltenden organischen Verbindungen hergestellt werden, beispielsweise durch die Epoxidierung von Fetten oder Ölen, wie Sojaöl, zu epoxidiertern Sojaöl. Die Polyepoxide können auch monofunktionelle Epoxide als Reaktivverdünner enthalten. Diese können durch die Reaktion von Alkoholen mit Epichlorhydrin hergestellt werden, beispielsweise Monoglycidylether von C4-C18 Alkoholen, Cresol, p-tert.-Butylpenol. Weitere einsetzbare Polyepoxide sind beispielsweise in "Handbook of Epoxy resins" von Henry Lee und Kris Neville, McGraw-Hill Book Company, 1967, beschrieben. Bevorzugt werden Glycidylether von Bisphenol A eingesetzt, die ein Epoxidäquivalentgewicht im Bereich von 170 - 250 g/eq, besonders bevorzugt mit einem Epoxidäquivalentgewicht im Bereich von 176 bis 196 g/eq haben. Der Epoxidäquivalentwert kann nach ASTM D-1652 bestimmt werden. Beispielsweise kann hierfür Eurepox 710 oder Epilox 828 eingesetzt werden.

In einer Ausführungsform des Faserverbundwerkstoffs weist die Isocyanatzusammensetzung (i) und/oder die Polyolzusammensetzung (ii), bevorzugt die Isocyanatzusammensetzung (i) und die Polyolzusammensetzung (ii) jeweils, eine Viskosität bei 25 °C von unter 1000 mPas, bevorzugt von < 500 mPas, auf, wobei die Viskosität gemäß ASTM D445 (25 °C) bestimmt ist.

Polyisocyanatzusammensetzung (i) und Polyolzusammensetzung (ii), bevorzugt Polyisocyanatzusammensetzung (i) und aller mit Isocyanat reaktiver Gruppen, werden erfindungsgemäß in einem solchen Verhältnis eingesetzt, dass der Isocyanatindex zwischen 99 und 400, bevorzugt zwischen 100 und 250, liegt. Bevorzugt liegt der Isocyanatindex im Bereich von 100 bis 399, weiter bevorzugt im Bereich von 101 bis 249. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich optionaler chemischer Treibmittel und Verbindungen mit Epoxidgruppen, verstanden, nicht aber die Isocyanatgruppe selbst. Der Isocyanatindex wird rechnerisch bestimmt aus den Gewichts-% bzw. den Mengen der eingesetzten Komponenten und deren Funktionalitäten. Im Stand der Technik ist es allgemein herrschende Meinung, dass ein hoher Isocyanatindex das Risiko erhöht, dass es im Laufe der Produktion zu unerwünschten Reaktionen des Isocyanats mit Luftfeuchtigkeit kommt. Üblicherweise würde der Fachmann den Index daher so wählen, dass bei einem offenen Wickelprozess kein oder nur ein minimaler Isocyanatüberschuss vorliegt (Isocyanatindex 100-120). Beispielsweise offenbart die WO 03/085022 A einen Isocyanatindex > 120 im Wickelverfahren, wobei die Beispiele A9, A10, A11, A12, A13, A14 alle nur Mengenangaben enthalten aber keine Details bezüglich Verarbeitbarkeit und Schaumbildung. WO18/036943 A beschreibt eine ähnliche Chemie (aber nicht einen EObasierten Vernetzer sondern überwiegende Polyole mit sek. OH) wie die vorliegende Erfindung und gibt einen Index im Bereich von bis zu 200 an (bevorzugt bis 110), ist aber nicht für die Anwendung Faserwickeln optimiert. Überraschenderweise wurde gefunden, dass die erfindungsgemäße Polyolzusammensetzung es möglich macht, einen hohen Isocyanatüberschuss zwischen 99 und 400, bevorzugt zwischen 100 und 250 einzusetzen. Es konnte überraschend gezeigt werden, dass bei Verwendung der erfindungsgemäßen Polyolzusammensetzung auch bezüglich eines höheren Index überraschenderweise verbesserte Eigenschaften erhalten werden - insbesondere bezüglich Wärmeformbeständigkeit - und trotz hohem Index überraschenderweise die Verarbeitbarkeit/ Blasenbildungstendenz ausgezeichnet ist.

Das Verhältnis der Isocyanatgruppen zu Epoxidgruppen beträgt zwischen 12: 1 und 2:1, bevorzugt zwischen 10: 1 und 4:1.

In einer Ausführungsform des Faserverbundwerkstoffs enthält weder die Polyisocyanatzusammensetzung (i) noch die Polyolzusammensetzung (ii) Radikalstarter oder Photoinitiatoren. In einer Ausführungsform des Faserverbundwerkstoffs sind Radikalinhibitoren enthalten. Als Radikalinhibitoren können Substanzen eingesetzt werden, die zu einem Abbruch oder zu einer Verzögerung der radikalischen Polymerisation der Kohlenstoff-KohlenstoffDoppelbindungen führen. Radikalinhibitoren, auch als Radikalfänger bezeichnet, umfassen Bis(trifluormethyl)nitroxid, Aminoxyl-Radikale, 2,2-Diphenyl-1-pikrylhydrazyl und 2,2,6,6-Tetramethylpiperidin-1-yloxy. Bevorzugte Radikalinhibitoren sind Phenothiazin, Nitrobenzol, Hydrochinonmonomethylether, p-Benzochinon und Diphenylpicrylhydrazyl. In einer bevorzugten Ausführungsform enthält die Reaktionsmischung 0,0001 bis 2,0 Gew.-%, vorzugsweise 0,0005 bis 1,0) Gew.-% und insbesondere 0,001 bis 0,5 Gew.-% Radikalinhibitor, bezogen auf das Gesamtgewicht der Komponenten (ii). Die Radikalinhibitoren können grundsätzlich zu Komponente (i) und/oder zu Komponente (ii) zugegeben werden.

Weiter können optional Hilfsmittel und/oder Zusatzstoffe (ii.1.4) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Entlüfter, Entschäumer, Wasserfänger, Haftvermittler, Benetzungsmittel, Verlaufhilfsmittel, Thixotropiermittel, Trennmittel, Weichmacher, Verdünner, Füllstoffe, Farbstoffe, Pigmente, Flammschutzmittel, Additive zur Unterdrückung der Rauchbildung, Hydrolyseschutzmittel, Antistatika, Antioxidantien, UV-Schutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben. Dem Fachmann ist bekannt, dass diese Additive im Bereich von 0 bis 25 Gewichtsprozent bezogen auf die Polyolzusammensetzung eingesetzt werden können.

In einer Ausführungsform des Faserverbundwerkstoffs wird ein kompaktes Polyurethan ohne Zugabe eines Treibmittels erhalten. Geringe Mengen an Treibmittel, beispielsweise Wasser, das herstellungsbedingt in den Polyolen enthalten ist, sind dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gewichts-%, besonders

bevorzugt weniger als 0,1 Gewichts -% und insbesondere weniger als 0,05 Gewichts-% Wasser, jeweils bezogen auf das Gesamtgewicht aller eingesetzten Komponenten. Die optionalen Hilfsmittel und/oder Zusatzstoffe (ii.1.4) umfassen bevorzugt Wasserfänger. Als Zusatzstoffe können als Katalysatoren (ii.1.4) übliche Polyurethankatalysatoren eingesetzt werden. Diese beschleunigen die Reaktion der Verbindungen mit gegenüber Isocyanaten reaktiven Wasserstoffatome (b) mit den Di- und Polyisocyanaten (a) stark. Als übliche Katalysatoren, die zur Herstellung der Polyurethane eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, Dimethylcyclohexylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, beispielsweise Zinn-(II)-acetat, Zinn-(II)-octoat, Zinn-(II)-ethylhexoat und Zinn-(II)-laurat und die Dialkylzinn-(IV)-salze von organischen Carbonsäuren, beispielsweise Dibutyl-zinndiacetat, Dibutylzinndilaurat, Dibutylzinn-maleat und Dioctylzinndiacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (ii.1.4) um einen Ester, werden vorzugsweise ausschließlich Aminkatalysatoren eingesetzt. Es können auch dem Fachmann bekannte sogenannte latente Katalysatoren verwendet werden, die bei Raumtemperatur keine oder nur eine geringe katalytische Aktivität aufweisen und erst beispielsweise durch Temperaturerhöhung aktiviert werden. Beispiele für diese Katalysatoren finden sich u.a. in DE 102008021980 A1 bzw. WO 2009/115540 A1.

Katalysatoren (ii.1.4) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (ii), eingesetzt werden. In einer weiter bevorzugten Ausführungsform können die Hilfs und Zusatzstoffe (ii.1.4) basische Katalysatoren umfassen, die keine üblichen Polyurethanbildenden Katalysatoren sind. Diese umfassen beispielsweise die Polyisocyanuratbildung katalysierende Katalysatoren. Polyisocyanuratkatalysatoren umfassen Alkalimetallcarboxylate. Diese umfassen bevorzugt Formiate und Acetate, insbesondere Acetate, wie Natriumacetat,Kaliumacetat und Caesiumacetat.

In einer Ausführungsform des Faserverbundwerkstoffs enthält die Polyisocyanatzusammensetzung (i) und/oder die Polyolzusammensetzung (ii) Alkali- oder Erdalkali-carboxylate. In einer Ausführungsform des Faserverbundwerkstoffs enthält die Polyisocyanatzusammensetzung (i) und/oder die Polyolzusammensetzung (ii) einen Säure-blockierten Katalysator.

Eine weitere Art von Zusatzstoffen (ii.1.4) sind Entlüfter, die dem Fachmann bekannt sind, beispielsweise beschrieben in Thomas Brock, Michael Groteklaes, Peter Mischke: Lehrbuch der Lacktechnologie. Hrsg.: Ulrich Zorll, 2. Auflage, Vincentz Verlag, Hannover 2000, ISBN 978-3-87870-569-7, Kap. 2.4.2.1, Entschäumer und Entlüfter, S. 169 f. In einer weiteren Ausführungsform können solche Komponenten (ii-1.4), die keine gegenüber Isocyanaten reaktiven Wasserstoffatome enthalten, auch der Polyisocyanatzusammensetzung (i) zugesetzt werden.

Einige Ausführungsformen enthalten als Zusatzstoffe (ii.1.4) Füllstoffe. Die Gruppe der Füllstoffe enthält gemahlene Mineralien wie Metalloxide, Aluminiumhydroxid, Bentonite, Perlit, Flugasche, Erdalkalicarbonate wie beispielsweise Calciumcarbonat, Talk, Mika, Kaolin, Wollastonit, Quarzmehl, Kieselgur, Pyrogene Kieselsäure, Bariumsulfat, Calciumsulfat, Glassmikrokugeln, Glassmikrohohlkugeln, Graphit, Russ. Ferner enthalten sind Füllstoffe biologischen Ursprungs wie beispielsweise Holzfasern, Holzchips, Bambusfasern, Bambuschips, Stroh, Flachs, Zellulosefasern.

"Polyurethan" im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können.

In einer Ausführungsform des Faserverbundstoffes ist das Material der Fasern (b) ausgewählt aus der Gruppe von Glasfasern, Carbonfasern, Polyesterfasern, Polyethylenfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon., weiter bevorzugt handelt es sich üblicherweise um Glasfasern oder Carbonfasern. Der Begriff "Faser(n)" bedeutet im Rahmen der vorliegenden Erfindung bevorzugt Endlosfasern, welche als Einzelfaser oder gebündelt eingesetzt werden, insbesondere in Form von so genannten "Rovings", d.h. als Bündel, Strang oder Multifilamentgarn aus im wesentlichen parallel angeordneten Filamenten (Endlosfasern). Der Querschnitt eines Rovings ist vorzugsweise elliptisch oder rechteckig, wobei eliptisch auch die runde Form umfasst. Bevorzugt werden Rovings mit einer Feinheit im Bereich von 100 bis 10.000 tex, vorzugsweise im Bereich von 1.000 bis 5.000 tex, weiter bevorzugt im Bereich von 1.500 bis 3.000 tex, eingesetzt. Techniken zum Benetzen der Fasern sind nicht beschränkt und allgemein bekannt. Diese umfassen beispielsweise das Faser-Wickelverfahren, das Pultrusionsverfahren, das Handlaminierverfahren und das Infusionsverfahren bevorzugt als Vakuuminfusionsverfahren sowie das Fasersprühverfahren.

Bevorzugt ist der Faserverbundstoff entsprechend erhalten oder erhältlich aus einem Verfahren, in denen das

Reaktionsgemisch in Gegenwart von Fasern zum kompakten, porenfreien Polyurethan umgesetzt wird und auf die Verwendung von Treibmitteln verzichtet wird. Bevorzugt erfolgt die Herstellung des Faserverbundwerkstoffes daher mittels eines Verfahrens ausgewählt aus der Gruppe bestehend aus Faser-Wickelverfahren, Pultrusionsverfahren, Infusionsverfahren, wie Vakuuminfusionsverfahren bzw. RTM-Verfahren, Handlaminierverfahren, Prepregverfahren und Mischformen von zwei oder mehr dieser Verfahren.

Weniger bevorzugt sind Verfahren, in denen das Reaktionsgemisch in Gegenwart der Fasern leicht aufschäumt und dann beispielsweise mittels Pressverfahren komprimiert bzw. konsolidiert wird.

Ergänzt werden kann die Verwendung von Kurz- oder Langglasfasern, Endlosfasern, Gelege, Gewirke, Gestricke, Gewebe, Geflechte, Vliese, Matten, beispielsweise Wirrfasermatten, etc. Hierbei sind Lagen mit gleicher oder unterschiedlicher Faserorientierung möglich, wie beispielsweise unidirektional und/oder multidirektional.

Verfahren zur Herstellung eines Faserverbundwerkstoffes

Die Erfindung betrifft weiterhin ein Verfahren zur Herstellung eines Faserverbundwerkstoffes, insbesondere zur Herstellung eines Faserverbundwerkstoffes wie voranstehend beschrieben, umfassend die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols (ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen;
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt werden, dass der Isocyanatindex zwischen 99 und 400 liegt.

Das Polyurethan gemäß (a) ist ein kompaktes Polyurethan, welches eine Dichte von $\geq$ 850 g/l, bevorzugt im Bereich von 1000 bis 1500 g/l (L. J.Gibson M.F.Ashby Cellular solids, Cambridge press, 2. Auflage, 1997, Seiten 54-56), weiter bevorzugt im Bereich von 1000 bis 1300 g/l, aufweist, wobei die Dichte gemäß DIN EN ISO 1183-1 (September 2019) per Auftriebsverfahren bestimmt ist. Alle Angaben zur Dichte des kompakten Polyurethans bezieht sich jeweils auf das Polyurethan Reinharz, ohne Berücksichtigung von Füllstoffen. Werden entsprechend der nachstehend folgenden Erläuterungen zu (ii.1.4) Füllstoffe verwendet, verändern sich die angegebenen Dichten der erfindungsgemäßen Polyurethane entsprechend der Menge und der Dichte der verwendeten Füllstoffe.

In einer Ausführungsform umfasst das Verfahren zur Herstellung eines Faserverbundwerkstoffes die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols (ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen, wobei der mindestens dreifunktionelle Alkohol (ii.1) ein alkoxyliertes Polyetherpolyol ist, bei welchem mindestens eine endständige Alkoxy-Gruppe auf Ethylenoxid basiert;
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt werden, dass der Isocyanatindex zwischen 99 und 400 liegt.

Ein alkoxyliertes Polyetherpolyol, bei welchem mindestens eine Alkoxy-Gruppe auf Ethylenoxid basiert, meint ein Polyetherpolyol umfassend eine endständige Struktureinheit $-[O-CH_2-CH_2]_p-OH$, wobei p eine ganze Zahl aus dem Bereich von 1 bis 6 ist. Bevorzugt meint das alkoxyliertes Polyetherpolyol, bei welchem mindestens eine endständige Alkoxy-Gruppe auf Ethylenoxid basiert, ein Polyetherpolyol umfassend eine endständige Struktureinheit -[O-CHR-

$CH_2]_{p'}[-O-CH_2-CH_2]_p-OH$, wobei p eine ganze Zahl aus dem Bereich von 1 bis 6 ist, p' Null oder eine ganze Zahl aus dem Bereich von 1 bis 6 und R jeweils unabhängig für jede der p' Wiederholungseinheiten unabhängig ausgewählt ist aus Methylgruppe und Ethylgruppe.

In einer Ausführungsform umfasst das Verfahren zur Herstellung eines Faserverbundwerkstoffes die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt werden, dass der Isocyanatindex zwischen 99 und 400 liegt.

Details bzw. spezielle Ausführungsformen bzgl. der Polyisocyanatzusammensetzung (i), des mindestens dreifunktionellen Alkohols (ii.1), der mindestens zwei primären Hydroxylgruppen, bevorzugt drei primäre Hydroxylgruppen aufweist, sowie weiterer Komponenten der Polyolzusammensetzung (ii), sowie der Fasern (b) sind voranstehend bereits im Zusammenhang mit dem Faserverbundwerkstoff selbst beschrieben und gelten hier entsprechend für das Herstellungsverfahren.

In einer Ausführungsform umfasst das Verfahren zur Herstellung eines Faserverbundwerkstoffes die Schritte:

A) Bereitstellen einer Polyisocyanatzusammensetzung (i);
B) Bereitstellen einer Polyolzusammensetzung (ii), umfassend mindestens 15 Gewichts-%, bevorzugt 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D.1) Reagieren des Polyurethanreaktionsgemisches (a') in Gegenwart von Fasern (b) zu einem vorpolymerisierten Polyurethan (a), wobei die Fasern (b) zumindest teilweise in das Polyurethanreaktionsgemisch (a') bzw. in das Polyurethan (a) eingebettet vorliegen, unter Erhalt eines Laminats;
E) optional Formgebung des im Schritt D.1) hergestellten Laminats, wobei hierzu eine oder mehrere der im Schritt D.1) hergestellten Laminate verwendet und konsolidiert werden können;
F) Vollständige Aushärtung des Laminats gemäß D.1) bzw. des/der formgegebenen Laminat(e)s gemäß E),

wobei Polyisocyanatzusammensetzung (i) und Polyolzusammensetzung (ii) in einem solchen Verhältnis eingesetzt werden, dass der Isocyanatindex zwischen 99 und 400 liegt.

In einer Ausführungsform umfasst das Verfahren zur Herstellung eines Faserverbundwerkstoffes die Schritte:

A) Bereitstellen einer Polyisocyanatzusammensetzung (i);
B) Bereitstellen einer Polyolzusammensetzung (ii), umfassend mindestens 15 Gewichts-%, bevorzugt 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D.2) Reagieren des Polyurethanreaktionsgemisches (a') zu einem vorpolymerisierten Polyurethan (a),
E) Reagieren des vorpolymerisierten Polyurethans (a) in Gegenwart von Fasern (b) , wobei die Fasern (b) zumindest teilweise in das Polyurethanreaktionsgemisch (a') bzw. in das Polyurethan (a) eingebettet vorliegen, unter Erhalt eines Laminats;
F) optional Formgebung des im Schritt E) hergestellten Laminats, wobei hierzu eine oder mehrere der im Schritt D.1) hergestellten Laminate verwendet und konsolidiert werden können
G) Vollständige Aushärtung des Laminats gemäß E) bzw. des/der formgegebenen Laminat(e)s gemäß F),

wobei Polyisocyanatzusammensetzung (i) und Polyolzusammensetzung (ii) in einem solchen Verhältnis eingesetzt werden, dass der Isocyanatindex zwischen 99 und 400 liegt.

In einer Ausführungsform des Verfahrens zur Herstellung eines Faserverbundwerkstoffes ist das ethoxylierte

Polyetherpolyol (ii.1) erhalten oder erhältlich ist durch Umsetzung von:

ii.1.1) einem Polyol-Starter mit einer Funktionalität von 3 bis 6, bevorzugt 3 oder 4, mit
ii.1.2) Ethylenoxid, in Gegenwart eines Alkoxylierungs-Katalysators (ii.1.3);
ii.1.4) gegebenenfalls weiteren Hilfs- und/oder Zusatzstoffen.

In einer Ausführungsform des Verfahrens zur Herstellung eines Faserverbundwerkstoffes das weist das ethoxylierte Polyetherpolyol (ii.1) eine Hydroxylzahl von mehr als 300 mg KOH/g, bevorzugt von mehr als 450 mg KOH/g, weiter bevorzugt eine Hydroxylzahl im Bereich von 300 bis 1400 mg KOH/g, weiter bevorzugt im Bereich von 450 bis 1300 mg KOH/g, weiter bevorzugt im Bereich von 450 bis 1260 mg KOH/g, auf.

In einer Ausführungsform des Verfahrens zur Herstellung eines Faserverbundwerkstoffes weist das ethoxylierte Polyetherpolyol (ii.1) ein Äquivalentmolekulargewicht von weniger als 200 g/mol, bevorzugt im Bereich von 50 bis 140 g/mol, weiter bevorzugt im Bereich von 55 bis 135 g/mol, weiter bevorzugt im Bereich von 60 bis 130 g/mol, auf.

In einer Ausführungsform des Verfahrens zur Herstellung eines Faserverbundwerkstoffes wird das ethoxylierte Polyetherpolyol (ii.1) in 20 bis 100 Gewichts-%, bevorzugt in 25 bis 75 Gewichts-%, weiter bevorzugt in 30 bis 50 Gewichts-%, bezogen auf ein Gesamtgewicht der Polyolzusammensetzung (ii) von 100 Gewichts-%, eingesetzt.

In einer Ausführungsform des Verfahrens zur Herstellung eines Faserverbundwerkstoffes weist das ethoxylierte Polyetherpolyol (ii.1) keine auf Propylenoxid-basierte Endgruppen und/oder Butylenoxid-basierte Endgruppen aufweist, bevorzugt ausschließlich auf Ethylenoxid-basierte Endgruppen auf. In einer Ausführungsform des Verfahrens zur Herstellung eines Faserverbundwerkstoffes weist das ethoxylierte Polyetherpolyol (ii.1) ausschließlich Ethylenoxid-basierte Gruppen auf und enthält keine auf Propylenoxid-basierte Gruppen und/oder Butylenoxid-basierte Gruppen.

In einer Ausführungsform des Verfahrens zur Herstellung eines Faserverbundwerkstoffes umfasst der Polyol-Starter (ii.1.1) des ethoxylierten Polyetherpolyols (ii.1) ein Triol mit einer Funktionalität von 3, bevorzugt ein Triol der Formel (I)

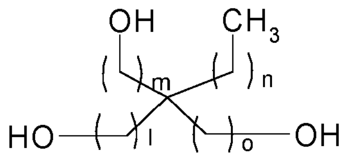

(I)

, wobei l, m, n und o jeweils unabhängig voneinander eine ganze Zahl aus dem Bereich von 1 bis 6 sind. Bevorzugt sind l, m, n und o des mindestens einen Triols (ii.1.1) der Formel (I) jeweils unabhängig voneinander eine ganze Zahl aus dem Bereich von 1 bis 3, bevorzugt sind l, m, n und o alle 1. Das Triol (ii.1.1) weist bevorzugt eine Hydroxylzahl im Bereich von 200 bis 2000 mg KOH/g, bevorzugt im Bereich von 250 bis 1850 mg KOH/g, weiter bevorzugt im Bereich von 300 bis 1850 mg KOH/g, auf.

In einer Ausführungsform des Verfahrens zur Herstellung eines Faserverbundwerkstoffes ist das ethoxylierte Polyetherpolyol (ii.1) nur durch die Umsetzung eines Polyol-Starters (ii.1.1.), insbesondere eines Triols der Formel (I), und Etylenoxid (ii.1.2) erzeugt und kein weiteres Alkylenoxid wird eingesetzt.

In einer Ausführungsform des Verfahrens zur Herstellung eines Faserverbundwerkstoffes ist das ethoxylierte Polyetherpolyol (ii.1) nur durch die Umsetzung eines Polyol-Starters (ii.1.1.), insbesondere Triols der Formel (I), und Etylenoxid (ii.1.2) erzeugt und kein weiterer Starter, insbesondere kein Aminbasierter Starter, wird eingesetzt.

In einer Ausführungsform des Verfahrens zur Herstellung eines Faserverbundwerkstoffes basiert das ethoxylierte Polyetherpolyol (ii.1) auf einem Triol, bevorzugt auf einem Triol (ii.1.1) der Formel (I) wie voranstehend beschrieben, und weist weiter bevorzugt die Formel (II) auf,

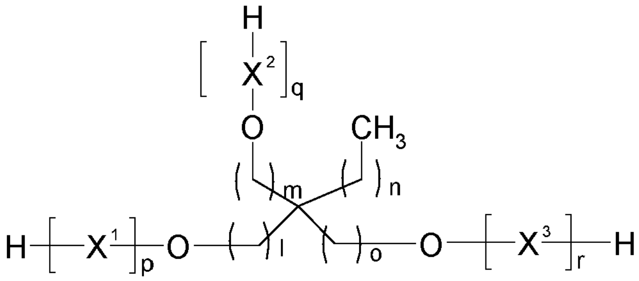

(II)

, wobei

l, m, n und o jeweils unabhängig voneinander eine ganze Zahl aus dem Bereich von 1 bis 6 sind, bevorzugt l, m, n und o alle 1 sind;
p, q und r jeweils unabhängig voneinander Null oder eine ganze Zahl aus dem Bereich von 1 bis 6 sind;
und $X^1$, $X^2$ und $X^3$ jeweils eine $-CH_2-CH_2-O-$Gruppe sind.

In einer Ausführungsform des Verfahrens zur Herstellung eines Faserverbundwerkstoffes umfasst die Polyolzusammensetzung (ii) kein Polyol, welches auf einem Aminbasierten Starter basiert.

In einer Ausführungsform des Verfahrens zur Herstellung eines Faserverbundwerkstoffes ist das Polyurethan (a) ohne Einsatz eines Polyol erhältlich oder erhalten, welches auf einem Aminbasierten Starter basiert.

Erfindungsgemäß für das Verfahren zur Herstellung eines Faserverbundwerkstoffes enthält die Polyolzusammensetzung (ii) weniger als 10 Gewichts-% von Polyolen, die eine Propylenoxid- und/oder eine Butylenoxid-Endgruppe aufweisen. In einer Ausführungsform des Verfahrens zur Herstellung eines Faserverbundwerkstoffes umfasst die Polyolzusammensetzung (ii) ein oder mehr weitere(s) Polyol(e), bevorzugt mindestens ein Polyesterpolyol, weiter bevorzugt ein aromatisches Polyesterpolyol oder ein fettchemisches Polyol. Das mindestens eine Polyesterpolyol, bevorzugt das aromatische Polyesterpolyol oder das fettchemische Polyol, weist bevorzugt eine Funktionalität auf im Bereich von 2 bis 3, weiter bevorzugt im Bereich von 2,4 bis 3. Details zu den eingesetzten Polyesterpolyolen bzw. den bevorzugten aromatischen Polyesterpolyolen bzw. den bevorzugten fettchemischen Polyolen sind eingangs bereits in der Sektion zum Faserverbundwerkstoff beschrieben; die dort beschriebenen Details gelten ebenfalls für das Verfahren. In einer Ausführungsform des Verfahrens zur Herstellung eines Faserverbundwerkstoffes enthält die Polyolzusammensetzung (ii) keine Polyole, die eine Propylenoxid-Endgruppe oder Butylenoxid-Endgruppe aufweisen. In einer Ausführungsform des Verfahrens zur Herstellung eines Faserverbundwerkstoffes enthält die Polyolzusammensetzung (ii) weniger als 10 Gewichts-% von Polyolen, die eine Propylenoxid und/oder Butylenoxidgruppe aufweisen. In einer Ausführungsform des Verfahrens zur Herstellung eines Faserverbundwerkstoffes enthält die Polyolzusammensetzung (ii) keine Polyole, die eine Propylenoxid- oder Butylenoxidgruppe aufweisen.

In einer Ausführungsform des Verfahrens zur Herstellung eines Faserverbundwerkstoffes umfasst die Polyolzusammensetzung (ii) mindestens einen Reaktivverdünner, wobei der mindestens eine Reaktivverdünner bevorzugt eine Substanz mit mindestens einer olefinischen Gruppe, bevorzugt eine Substanz mit mindestens 2 olefinischen Gruppen, weiter bevorzugt eine Substanz mit mindestens einer endständigen olefinischen Gruppe, weiter bevorzugt mindestens 2 endständigen olefinischen Gruppen, enthält.

In einer Ausführungsform des Verfahrens zur Herstellung eines Faserverbundwerkstoffes enthält das Polyurethan ein Epoxidharz, bevorzugt in 1 bis 50 Gewichts-%, bevorzugt in 5 bis 25 Gewichts-%, jeweils bezogen auf das Gesamtgewicht der Polyolzusammensetzung (ii).

In einer Ausführungsform des Verfahrens zur Herstellung eines Faserverbundwerkstoffes weist die Isocyanatzusammensetzung (i) und/oder die Polyolzusammensetzung (ii), bevorzugt die Isocyanatzusammensetzung (i) und die Polyolzusammensetzung (ii) jeweils,eine Viskosität bei 25 °C von unter 1000 mPas, bevorzugt von < 500 mPas, auf, wobei die Viskosität gemäß ASTM D445 (25 °C) bestimmt ist.

Im Verfahren zur Herstellung eines Faserverbundwerkstoffes werden Polyisocyanatzusammensetzung (i) und Polyolzusammensetzung (ii), bevorzugt Polyisocyanatzusammensetzung (i) und aller mit Isocyanat reaktiver Gruppen, in einem solchen Verhältnis eingesetzt, dass der Isocyanatindex zwischen 99 und 400, bevorzugt zwischen 100 und 250, liegt. Bevorzugt liegt der Isocyanatindex im Bereich von 100 bis 399, weiter bevorzugt im Bereich von 101 bis 249.

In einer Ausführungsform des Verfahrens zur Herstellung eines Faserverbundwerkstoffes werden außer Polyisocyanatzusammensetzung (i), Polyolzusammensetzung (ii) und den Fasern (b) keine weiteren Komponenten nach dem Vermischen von (i) und (II) bzw. nach dem Zusatz von (b) zugegeben.

In einer Ausführungsform des Verfahrens zur Herstellung eines Faserverbundwerkstoffes enthalten weder Polyisocyanatzusammensetzung (i) noch Polyolzusammensetzung (ii) Urethan-, Harnstoff-, Amid-, Biuret-, Allophanat- oder Isocyanuratgruppen. In einer Ausführungsform des Verfahrens zur Herstellung eines Faserverbundwerkstoffes enthält die Polyisocyanatzusammensetzung (i) ein Isocyanatprepolymer.

In einer Ausführungsform des Verfahrens zur Herstellung eines Faserverbundwerkstoffes werden weitere Hilfs- und/oder Zusatzstoffe (ii.1.4) zugesetzt, wobei bevorzugt die weitere Hilfs- und/oder Zusatzstoffe in der Polyolzusammensetzung (ii) enthalten sind, weiter bevorzugt der mindestens dreifunktionelle Alkohol (ii.1), der mindestens zwei primären Hydroxylgruppen, bevorzugt drei primäre Hydroxylgruppen aufweist, weiter bevorzugt das ethoxylierte Polyetherpolyol (ii.1) die weitere Hilfs- und/oder Zusatzstoffe enthält, weiter bevorzugt das ethoxylierte Polyetherpolyol (ii.1) erhalten oder erhältlich ist durch Umsetzung von einem Polyol-Starter (ii.1.1) mit einer Funktionalität von 3 bis 6, bevorzugt 3 oder 4 mit Ethylenoxid (ii.1.2), in Gegenwart eines Alkoxylierungs-Katalysators (ii.1.3) und den weiteren Hilfs- und/oder Zusatzstoffen (ii.1.4). In einer Ausführungsform des Verfahrens zur Herstellung eines Faserverbundwerkstoffes werden weitere Hilfs- und/oder Zusatzstoffe zugesetzt, wobei bevorzugt die weitere Hilfs- und/oder Zusatzstoffe in der Isocyanatzusammensetzung (i) enthalten sind. Weitere Details zu den weitere Hilfs- und/oder Zusatzstoffe (ii.1.4) sind eingangs bereits für den Faserverbundwerkstoff beschrieben und gelten hier entsprechend für das Herstellungsverfahren. In einer Ausführungsform des Faserverbundwerkstoffs wird ein kompaktes Polyurethan ohne Zugabe eines Treibmittels erhalten. Geringe Mengen an Treibmittel, beispielsweise Wasser, das herstellungsbedingt in den Polyolen enthalten ist, ist dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gewichts-%, besonders bevorzugt weniger als 0,1 Gewichts-% und insbesondere weniger als 0,05 Gewichts-% Wasser, jeweils bezogen auf das Gesamtgewicht aller eingesetzten Komponenten. Die optionalen Hilfsmittel und/oder Zusatzstoffe (ii.1.4) umfassen bevorzugt Wasserfänger.

Bezüglich der Verfahren zur Herstellung eines Faserverbundwerkstoffes sind solche bevorzugt, in denen das Reaktionsgemisch in Gegenwart von Fasern zum kompakten, porenfreien Polyurethan umgesetzt wird und auf die Verwendung von Treibmitteln verzichtet wird. Bevorzugt erfolgt die Herstellung des Faserverbundwerkstoffes daher mittels eines Verfahrens ausgewählt aus der Gruppe bestehend aus Faser-Wickelverfahren, Pultrusionsverfahren, Infusionsverfahren, wie Vakuuminfusionsverfahren bzw. RTM-Verfahren, Handlaminierverfahren und Mischformen von zwei oder mehr dieser Verfahren.

Weniger bevorzugt sind Verfahren, in denen das Reaktionsgemisch in Gegenwart der Fasern leicht aufschäumt und dann beispielsweise mittels Pressverfahren komprimiert bzw. konsolidiert wird.

Bevorzugt ist das Verfahren zur Herstellung eines Faserverbundwerkstoffes ein Verfahren, in dem das Reaktionsgemisch in Gegenwart von Fasern zum kompakten, porenfreien Polyurethan umgesetzt wird und auf die Verwendung von Treibmitteln verzichtet wird. Bevorzugt erfolgt die Herstellung des Faserverbundwerkstoffes daher mittels eines Verfahrens ausgewählt aus der Gruppe bestehend aus Faser-Wickelverfahren, Pultrusionsverfahren, Infusionsverfahren, wie Vakuuminfusionsverfahren bzw. RTM-Verfahren, Handlaminierverfahren, Prepregverfahren und Mischformen von zwei oder mehr dieser Verfahren.

Weniger bevorzugt sind Verfahren, in denen das Reaktionsgemisch in Gegenwart der Fasern leicht aufschäumt und dann beispielsweise mittels Pressverfahren komprimiert bzw. konsolidiert wird.

In einer Ausführungsform erfolgt das Verfahren zur Herstellung eines Faserverbundwerkstoffes unter Anwendung des Faserwickelverfahrens, indem die Polyisocyanatzusammensetzung (i) und die Polyolzusammensetzung (ii) vermischt werden, in ein Imprägnierbad dosiert werden und dort mit den Fasern (b) in Kontakt gebracht werden, wobei die imprägnierten Fasern anschließend auf einem Wickeldorn, einem Werkzeug oder einem Bauteil abgelegt werden.

Das Imprägnierbad ist ausgeführt entsprechend WO 19/025439 A1. Das Bad ist direkt mit dem Mischkopf der Dosieranlage verbunden und kann temperiert werden. Das Harzfassungsvermögen des Imprägnierbads ist so dimensioniert, dass mit möglichst wenig Harz gearbeitet werden kann und ein häufiger Austausch mehrmals pro Minute erfolgt. Der Harzverbrauch pro Minute läßt sich einfach berechnen aus der Anzahl, der Dichte sowie der Texzahl der Fasern, dem gewünschten Faservolumengehalt, der Dichte des Harzes und der Geschwindigkeit, mit der die Fasern durch das Bad gezogen werden. Die Geometrie des Bads ist so gewählt, dass keine Totzonen entstehen, in denen sich Harz anreichern kann. Es ist ferner die Möglichkeit vorgesehen, in das Imprägnierbad eine Reinigungsflüssigkeit bzw. Druckluft zuzugeben, ohne dass das Imprägnierbad hierfür demontiert werden muss.

In einer Ausführungsform erfolgt das Verfahren zur Herstellung eines Faserverbundwerkstoffes unter Anwendung des Pultrusions-Verfahrens indem die Polyisocyanatzusammensetzung (i) und die Polyolzusammensetzung (ii) vermischt werden, das Reaktionsgemisch in eine geschlossenen Imprägniervorrichtung dosiert wird, in der sie in Kontakt mit endlosen, orientieren Fasern und/oder Fasermatten (b) kommt, die kontinuierlich durch ein Formwerkzeug gezogen und dann ausgehärtet werden. In einer Ausführungsform erfolgt das Verfahren zur Herstellung eines Faserverbundwerkstoffes als Vakuuminfusionsverfahren, beispielsweise unter Anwendung des RTM-Verfahrens, indem die Polyisocyanatzusammensetzung (i) und die Polyolzusammensetzung (ii) vermischt werden, in ein zumindest teilweise evakuiertes Werkzeug dosiert werden, in dem zuvor ein Preform aus Fasern (b) eingelegt wurde, und anschließend im Formwerkzeug ausgehärtet wird.

In einer Ausführungsform erfolgt das Verfahren zur Herstellung eines Faserverbundwerkstoffes zur Herstellung von mit Polyurethan vorimprägnierten Fasern bzw. Textilien (Polyurethan-Prepregs).

Entsprechend WO 2014/170252 A1 ist es bevorzugt, zur Herstellung von Polyurethan-basierten Prepregs Polyole zu verwenden mit einem hohen Anteil sekundärer OH-Endgruppen (40-100%) unter Verwendung latenter Katalysatoren. Gemäß WO 2014/170252 A1 und WO 2018/219756 A1 ist es vorteilhaft bzw. notwendig, hierzu ein Isocyanatgruppen-haltiges Prepolymer zu verwenden, das auf 90°C erwärmt wird und dann mit den Fasern imprägniert wird. Entsprechend dem erfindungsgemäßen Verfahren können bevorzugt mindestens 30 Gewichts%, eines ethoxylierten Polyetherpolyols zur Herstellung von Prepregs verwendet werden. Hierbei können nach einer Ausführungsform die Polyisocyanatzusammensetzung (i) und die Polyolzusammensetzung (ii) vermischt werden, mit den orientierten Fasern (b) in Kontakt gebracht und anschließend partiell ausgehärtet werden. Nach einer Ausführungsform werden die Polyisocyanatzusammensetzung (i) und die Polyolzusammensetzung (ii) vermischt und bei einer Temperatur unter 80°C zur Reaktion gebracht. Dann wird das vorreagierte Gemisch mit den orientierten Fasern (b) in Kontakt gebracht und anschließend partiell ausgehärtet. Entsprechend beider Ausführungsformen wird wird das Prepregmaterial (gegebenenfalls nach Umformung und Konsolidierung mit weiteren Lagen Prepreg beispielsweise in einer Presse) zur finalen Härtung für 3 Minuten bis 3 Stunden auf 150°C erwärmt.

Das erfindungsgemäße Verfahren ist besonders dann vorteilhaft, wenn ein Herstellprozess des Faserverbundwerkstoffs gewählt wird, bei dem lange offene Zeiten (> 30 Minuten) gefordert werden und das Reaktionsmaterial über einen längeren Zeitraum in direktem Kontakt mit umgebenden Atmosphäre ist, beispielsweise bei der Verwendung offener Imprägnierbäder oder der Herstellung von Prepregs.

Alternativ erfolgt das Verfahren zur Herstellung eines Faserverbundwerkstoffes mittels des Fasersprühverfahrens, insbesondere Long-Fiber-Injection, oder SMC-Verfahrens. In einer Ausführungsform erfolgt das Verfahren zur Herstellung eines Faserverbundwerkstoffes unter Anwendung des Long-Fiber-Injection-Verfahrens indem die Polyisocyanatzusammensetzung (i) und die Polyolzusammensetzung (ii) vermischt werden, in das Reaktionsgemisch, vorzugsweise am Mischkopf, geschnittene Fasern (b) rieseln und das Material danach in ein Formwerkzeug und/oder auf ein Trägermaterial gesprüht und dort anschließend ausgehärtet wird. In einer Ausführungsform erfolgt das Verfahren zur Herstellung eines Faserverbundwerkstoffes zur Herstellung eines SMC (sheet moulding compound), indem die Polyisocyanatzusammensetzung (i) und die Polyolzusammensetzung (ii) vermischt werden, auf mindestens eine von zwei Trägerfolien aufgebracht werden, mit Verstärkungsfasern in Kontakt gebracht werden, die beiden Trägerfolien zu einem Sandwich zusammengeführt und gewalzt werden, wobei die SMC optional geschnitten in Stapeln oder aufgerollt gelagert werden, wobei optional nach Entfernen der Trägerfolie eine oder mehrere der SMC-Teile in einem Presswerkzeug zum Bauteil konsolidiert und ausgehärtet werden.

Die Erfindung betrifft weiterhin einen Faserverbundwerkstoff erhalten oder erhältlich nach dem voranstehend beschriebenen Verfahren.

Die Erfindung betrifft weiterhin die Verwendung eines Faserverbundwerkstoffes wie voranstehend beschrieben oder eines Faserverbundwerkstoffes erhalten oder erhältlich nach dem voranstehend beschrieben Verfahren für die Herstellung eines Rohres, insbesondere eines konischen Rohres, eines Rohrverbindungsstückes, eines Druckbehälters, eines Lagertanks, eines Isolators, eines Mastes, eines Stabs, einer Walze, einer Torsionswelle, eines Profils, eines Sportgerätes, eines Formteils, einer Abdeckung, eines Automobil-Außenteiles, eines Seils, eines Taus, einer Isogridstruktur, oder eines textilen Halbzeugs.

Die vorliegende Erfindung wurde durch die folgenden Ausführungsformen und Kombinationen von Ausführungsformen, die sich aus den entsprechenden Rückbezügen und Verweisen ergeben, näher illustriert. Insbesondere ist dabei anzumerken, dass in jedem Fall, in dem ein Bereich von Ausführungsformen benannt ist, beispielsweise im Kontext eines Ausdrucks wie "Ausführungsform (5), welche einer der Ausführungsformen (1) bis (4) konkretisiert" jede Ausführungsform in diesem Bereich als explizit für den Fachmann offenbart gemeint ist, d.h. die Formulierung dieses Ausdrucks für den Fachmann als synonym zu "Ausführungsform (5), welche einer der Ausführungsformen (1), (2), (3) und (4)" zu verstehen ist. Weiterhin wird angemerkt, dass der nachstehende Satz an Ausführungsformen nicht der Anspruchssatz ist, welcher den Schutzumfang bestimmt, sondern vielmehr einen geeignet strukturierten Teil der Beschreibung darstellt, welcher auf allgemeine und bevorzugte Aspekte der Erfindung gerichtet ist.

Gemäß einer Ausführungsform (1) betrifft die Erfindung einen Faserverbundwerkstoff umfassend die folgenden Komponenten:

a) ein Polyurethan, erhalten oder erhältlich durch Umsetzung mindestens der Komponenten:

i) eine Polyisocyanatzusammensetzung;

ii) eine Polyolzusammensetzung, umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols

(ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen;

b) Fasern, welche zumindest teilweise in das kompakte Polyurethan eingebettet vorliegen, wobei Polyisocyanatzusammensetzung (i) und Polyolzusammensetzung (ii) in einem solchen Verhältnis eingesetzt werden, dass der Isocyanatindex zwischen 99 und 400 liegt.

Eine bevorzugte Ausführungsform (2), welche Ausführungsform (1) konkretisiert, betrifft den Faserverbundwerkstoff umfassend die folgenden Komponenten:

a) ein Polyurethan, erhalten oder erhältlich durch Umsetzung mindestens der Komponenten:

i) eine Polyisocyanatzusammensetzung;
ii) eine Polyolzusammensetzung, umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);

b) Fasern, welche zumindest teilweise in das kompakte Polyurethan eingebettet vorliegen.

Eine bevorzugte Ausführungsform (3), welche Ausführungsform (1) oder (2) konkretisiert, betrifft den Faserverbundwerkstoff, wobei das ethoxylierte Polyetherpolyol (ii.1) erhalten oder erhältlich ist durch Umsetzung von:

ii.1.1) einem Polyol-Starter mit einer Funktionalität von 3 bis 6, bevorzugt 3 oder 4, mit
ii.1.2) Ethylenoxid, in Gegenwart eines Alkoxylierungs-Katalysators (ii.1.3);
ii.1.4) gegebenenfalls weiteren Hilfs- und/oder Zusatzstoffen.

Eine bevorzugte Ausführungsform (4), welche eine der Ausführungsformen (2) oder (3) konkretisiert, betrifft den Faserverbundwerkstoff n, wobei das ethoxylierte Polyetherpolyol (ii.1) eine Hydroxylzahl von mehr als 300 mg KOH/g, bevorzugt von mehr als 450 mg KOH/g, weiter bevorzugt eine Hydroxylzahl im Bereich von 300 bis 1400 mg KOH/g, weiter bevorzugt im Bereich von 450 bis 1300 mg KOH/g, weiter bevorzugt im Bereich von 450 bis 1260 mg KOH/g, aufweist.

Eine bevorzugte Ausführungsform (5), welche eine der Ausführungsformen (2) bis (4) konkretisiert, betrifft den Faserverbundwerkstoff, wobei das ethoxylierte Polyetherpolyol (ii.1) ein Äquivalentmolekulargewicht von weniger als 200 g/mol, bevorzugt im Bereich von 50 bis 140 g/mol, weiter bevorzugt im Bereich von 55 bis 135 g/mol, weiter bevorzugt im Bereich von 60 bis 130 g/mol, aufweist.

Eine bevorzugte Ausführungsform (6), welche eine der Ausführungsformen (2) bis (5) konkretisiert, betrifft den Faserverbundwerkstoff n, wobei das ethoxylierte Polyetherpolyol (ii.1) in 15 bis 100 Gewichts-%, bevorzugt in 20 bis 100 Gewichts-%, weiter bevorzugt in 25 bis 75 Gewichts-%, weiter bevorzugt in 30 bis 50 Gewichts-%, bezogen auf ein Gesamtgewicht der Polyolzusammensetzung (ii) von 100 Gewichts-%, eingesetzt wird.

Eine bevorzugte Ausführungsform (7), welche eine der Ausführungsformen (2) bis (6) konkretisiert, betrifft den Faserverbundwerkstoff, wobei das ethoxylierte Polyetherpolyol (ii.1) keine auf Propylenoxid-basierte Endgruppen und/oder Butylenoxid-basierte Endgruppen aufweist, bevorzugt ausschließlich auf Ethylenoxid-basierte Endgruppen aufweist.

Eine bevorzugte Ausführungsform (8), welche eine der Ausführungsformen (2) bis (7) konkretisiert, betrifft den Faserverbundwerkstoff, wobei das ethoxylierte Polyetherpolyol (ii.1) ausschließlich Ethylenoxid-basierte Gruppen aufweist und keine auf Propylenoxid-basierte Gruppen und/oder Butylenoxid-basierte Gruppen enthält.

Eine bevorzugte Ausführungsform (9), welche eine der Ausführungsformen (2) bis (8) konkretisiert, betrifft den Faserverbundwerkstoff , wobei der Polyol-Starter (ii.1.1) des ethoxylierten Polyetherpolyols (ii.1) ein Triol mit einer Funktionalität von 3, bevorzugt ein Triol der Formel (I)

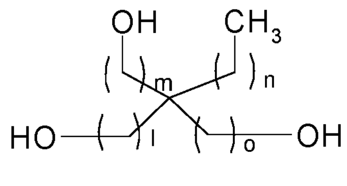

(I) ,

umfasst, wobei l, m, n und o jeweils unabhängig voneinander eine ganze Zahl aus dem Bereich von 1 bis 6 sind.

Eine bevorzugte Ausführungsform (10), welche Ausführungsform (9) konkretisiert, betrifft den Faserverbundwerkstoff, wobei l, m, n und o des mindestens einen Triols (ii.1.1) der Formel (I) jeweils unabhängig voneinander eine ganze Zahl aus dem Bereich von 1 bis 3, bevorzugt l, m, n und o alle 1, sind.

Eine bevorzugte Ausführungsform (11), welche eine der Ausführungsformen (9) oder (10) konkretisiert, betrifft den Faserverbundwerkstoff, wobei das Triol (ii.1.1) eine Hydroxylzahl im Bereich von 200 bis 2000 mg KOH/g, bevorzugt im Bereich von 250 bis 1850 mg KOH/g, weiter bevorzugt im Bereich von 300 bis 1850 mg KOH/g, aufweist.

Eine bevorzugte Ausführungsform (12), welche eine der Ausführungsformen (2) bis (11) konkretisiert, betrifft den Faserverbundwerkstoff, wobei das ethoxylierte Polyetherpolyol (ii.1) nur durch die Umsetzung eines Polyol-Starters (ii.1.1.), insbesondere eines Triols der Formel (I), und Etylenoxid (ii.1.2) erzeugt ist und kein weiteres Alkylenoxid eingesetzt wird.

Eine bevorzugte Ausführungsform (13), welche eine der Ausführungsformen (2) bis (12) konkretisiert, betrifft den Faserverbundwerkstoff, wobei das ethoxylierte Polyetherpolyol (ii.1) nur durch die Umsetzung eines Polyol-Starters (ii.1.1.), insbesondere Triols der Formel (I), und Etylenoxid (ii.1.2) erzeugt ist und kein weiterer Starter, insbesondere kein Aminbasierter Starter, eingesetzt wird.

Eine bevorzugte Ausführungsform (14), welche eine der Ausführungsformen (2) bis (13) konkretisiert, betrifft den Faserverbundwerkstoff, wobei das ethoxylierte Polyetherpolyol (ii.1) auf einem Triol basiert, bevorzugt auf einem Triol (ii.1.1) der Formel (I) gemäß einer der Ausführungsformen 8 bis 10, und weiter bevorzugt die Formel (II) aufweist,

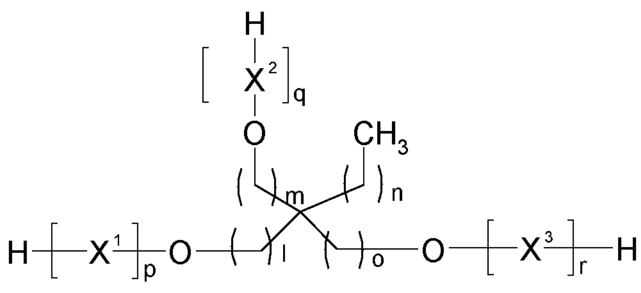

(II) ,

wobei

l, m, n und o jeweils unabhängig voneinander eine ganze Zahl aus dem Bereich von 1 bis 6 sind, bevorzugt l, m, n und o alle 1 sind;
p, q und r jeweils unabhängig voneinander Null oder eine ganze Zahl aus dem Bereich von 1 bis 6 sind;
und $X^1$, $X^2$ und $X^3$ jeweils eine $-CH_2-CH_2-O-$Gruppe sind.

Eine bevorzugte Ausführungsform (15), welche eine der Ausführungsformen (1) bis (14) konkretisiert, betrifft den Faserverbundwerkstoff, wobei die Polyolzusammensetzung (ii) kein Polyol umfasst, welches auf einem Aminbasierten Starter basiert.

Eine bevorzugte Ausführungsform (16), welche eine der Ausführungsformen (1 bis (14) konkretisiert, betrifft den Faserverbundwerkstoff, wobei das Polyurethan (a) ohne Einsatz eines Polyols erhältlich oder erhalten ist, welches auf einem Aminbasierten Starter basiert.

Eine bevorzugte Ausführungsform (17), welche eine der Ausführungsformen (1) bis (16) konkretisiert, betrifft den Faserverbundwerkstoff, wobei die Polyolzusammensetzung (ii) ein oder mehr weitere(s) Polyol(e) umfasst, bevorzugt mindestens ein Polyesterpolyol, weiter bevorzugt ein aromatisches Polyesterpolyol oder ein fettchemisches Polyol, wobei das mindestens eine Polyesterpolyol, bevorzugt das aromatische Polyesterpolyol oder das fettchemische Polyol,

bevorzugt eine Funktionalität aufweist im Bereich von 2 bis 3, weiter bevorzugt im Bereich von 2,4 bis 3.

Eine bevorzugte Ausführungsform (18), welche eine der Ausführungsformen (1) bis (17) konkretisiert, betrifft den Faserverbundwerkstoff, wobei die Polyolzusammensetzung (ii) keine Polyole enthält, die eine Propylenoxid-Endgruppe oder Butylenoxid-Endgruppe aufweisen.

Eine bevorzugte Ausführungsform (19), welche eine der Ausführungsformen (1) bis (18) konkretisiert, betrifft den Faserverbundwerkstoff, wobei die Polyolzusammensetzung (ii) weniger als 10 Gewichts-% von Polyolen enthält, die eine Propylenoxid und/oder Butylenoxidgruppe aufweisen.

Eine bevorzugte Ausführungsform (20), welche eine der Ausführungsformen (1) bis (19) konkretisiert, betrifft den Faserverbundwerkstoff, wobei die Polyolzusammensetzung (ii) keine Polyole enthält, die eine Propylenoxid- oder Butylenoxidgruppe aufweisen und/oder wobei die Polyolzusammensetzung (ii) keine auf Propylenoxid und/oder Butylenoxid-basierten Polyole enthält.

Eine bevorzugte Ausführungsform (21), welche eine der Ausführungsformen (1) bis (20) konkretisiert, betrifft den Faserverbundwerkstoff, wobei die Polyolzusammensetzung (ii) mindestens einen Reaktivverdünner, bevorzugt zu 5 bis 50 Gewichts-%, bezogen auf das Gesamtgewicht der Polyolzusammensetzung (ii),umfasst, wobei der mindestens eine Reaktivverdünner bevorzugt eine Substanz mit mindestens einer olefinischen Gruppe, bevorzugt eine Substanz mit mindestens 2 olefinischen Gruppen, weiter bevorzugt eine Substanz mit mindestens einer endständigen olefinischen Gruppe, weiter bevorzugt mindestens 2 endständigen olefinischen Gruppen, enthält.

Eine bevorzugte Ausführungsform (22), welche eine der Ausführungsformen (1) bis (21) konkretisiert, betrifft den Faserverbundwerkstoff, wobei das Polyurethan ein Epoxidharz enthält.

Eine bevorzugte Ausführungsform (23), welche eine der Ausführungsformen (1) bis (22) konkretisiert, betrifft den Faserverbundwerkstoff, wobei das Polyurethan das Epoxidharz in 1 bis 50 Gewichts-%, bevorzugt in 5 bis 25 Gewichts-%, enthält, jeweils bezogen auf das Gesamtgewicht der Polyolzusammensetzung (ii).

Eine bevorzugte Ausführungsform (24), welche eine der Ausführungsformen (1) bis (23) konkretisiert, betrifft den Faserverbundwerkstoff, wobei die Isocyanatzusammensetzung (i) eine Viskosität bei 25 °C von unter 1000 mPas, bevorzugt von < 500 mPas, aufweist (ASTM D445 (25 °C)).

Eine bevorzugte Ausführungsform (25), welche eine der Ausführungsformen (1) bis (24) konkretisiert, betrifft den Faserverbundwerkstoff, wobei Polyisocyanatzusammensetzung (i) und Polyolzusammensetzung (ii), bevorzugt Polyisocyanatzusammensetzung (i) und aller mit Isocyanat reaktiver Gruppen, in einem solchen Verhältnis eingesetzt werden, dass der Isocyanatindex zwischen 100 und 250 liegt.

Eine bevorzugte Ausführungsform (26), welche eine der Ausführungsformen (1) bis (25) konkretisiert, betrifft den Faserverbundwerkstoff, wobei weder die Polyisocyanatzusammensetzung (i) noch die Polyolzusammensetzung (ii) Radikalstarter oder Photoinitiatoren enthält.

Eine bevorzugte Ausführungsform (27), welche eine der Ausführungsformen (1) bis (26) konkretisiert, betrifft den Faserverbundwerkstoff, wobei die Polyisocyanatzusammensetzung (i) und/oder die Polyolzusammensetzung (ii) Alkali- oder Erdalkali-carboxylate enthält.

Eine bevorzugte Ausführungsform (28), welche eine der Ausführungsformen (1) bis (27) konkretisiert, betrifft den Faserverbundwerkstoff, wobei die Polyisocyanatzusammensetzung (i) und/oder die Polyolzusammensetzung (ii) einen Säure-blockierten Katalysator enthält.

Eine bevorzugte Ausführungsform (29), welche eine der Ausführungsformen (1) bis (28) konkretisiert, betrifft den Faserverbundwerkstoff, wobei die Viskosität der Polyolzusammensetzung (ii) kleiner als 1000 mPas, bevorzugt kleiner als 500 mPas ist (ASTM D445 (25 °C)).

Eine Ausführungsform (30) betrifft ein Verfahren zur Herstellung eines Faserverbundwerkstoffes, insbesondere zur Herstellung eines Faserverbundwerkstoffes nach einer der Ausführungsformen (1) bis (29), umfassend die Schritte:

A) Bereitstellen einer Polyisocyanatzusammensetzung (i);

B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines mindestens dreifunktionellen Alkohols (ii.1), der mindestens zwei primären Hydroxylgruppen, bevorzugt drei primäre Hydroxylgruppen aufweist und weniger als 10 Gewichts-% von Polyolen, die eine Propylenoxid und/oder Butylenoxid-basierten Endgruppe aufweisen;

C) Vermischen von Polyisocyanatzusammensetzung (i) und Polyolzusammensetzung (ii) unter Erhalt eines Polyurethanreaktionsgemisches (a');

D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt werden, dass der Isocyanatindex zwischen 99 und 400 liegt.

Eine bevorzugte Ausführungsform (31), welche Ausführungsform (30) konkretisiert, betrifft das Verfahren zur Herstellung eines Faserverbundwerkstoffes, insbesondere das zur Herstellung eines Faserverbundwerkstoffes nach einer der Ausführungsformen (1) bis (29), umfassend die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt werden, dass der Isocyanatindex zwischen 99 und 400 liegt.
Eine bevorzugte Ausführungsform (32), welche Ausführungsform (31) konkretisiert, betrifft das Verfahren zur Herstellung eines Faserverbundwerkstoffes, umfassend die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D.1) Reagieren des Polyurethanreaktionsgemisches (a') in Gegenwart von Fasern (b) zu einem vorpolymerisierten Polyurethan (a), wobei die Fasern (b) zumindest teilweise in das Polyurethanreaktionsgemisch (a') bzw. in das Polyurethan (a) eingebettet vorliegen, unter Erhalt eines Laminats;
E) optional Formgebung des im Schritt D.1) hergestellten Laminats, wobei hierzu eine oder mehrere der im Schritt D.1) hergestellten Laminate verwendet und konsolidiert werden können;
F) Vollständige Aushärtung des Laminats gemäß D.1) bzw. des/der formgegebenen Laminat(e)s gemäß E),

wobei Polyisocyanatzusammensetzung (i) und Polyolzusammensetzung (ii) in einem solchen Verhältnis eingesetzt werden, dass der Isocyanatindex zwischen 99 und 400 liegt.
Eine bevorzugte Ausführungsform (33), welche Ausführungsform (31) konkretisiert, betrifft das Verfahren zur Herstellung eines Faserverbundwerkstoffes , umfassend die Schritte:

A) Bereitstellen einer Polyisocyanatzusammensetzung (i);
B) Bereitstellen einer Polyolzusammensetzung (ii), umfassend mindestens 15 Gewichts-%, bevorzugt mindestens 20 Gewichts-%, weiter bevorzugt mindestens 25 Gewichts-%, weiter bevorzugt mindestens 30 Gewichts-%, eines ethoxylierten Polyetherpolyols (ii.1);
C) Vermischen von Polyisocyanatzusammensetzung (i) und Polyolzusammensetzung (ii) unter Erhalt eines Polyurethanreaktionsgemisches (a');
D.2) Reagieren des Polyurethanreaktionsgemisches (a') zu einem vorpolymerisierten Polyurethan (a),
E) Reagieren des vorpolymerisierten Polyurethans (a) in Gegenwart von Fasern (b) , wobei die Fasern (b) zumindest teilweise in das Polyurethanreaktionsgemisch (a') bzw. in das Polyurethan (a) eingebettet vorliegen, unter Erhalt eines Laminats;
F) optional Formgebung des im Schritt E) hergestellten Laminats, wobei hierzu eine oder mehrere der im Schritt D.1) hergestellten Laminate verwendet und konsolidiert werden können
G) Vollständige Aushärtung des Laminats gemäß E) bzw. des/der formgegebenen Laminat(e)s gemäß F),

wobei Polyisocyanatzusammensetzung (i) und Polyolzusammensetzung (ii) in einem solchen Verhältnis eingesetzt werden, dass der Isocyanatindex zwischen 99 und 400 liegt.
Eine bevorzugte Ausführungsform (34), welche eine der Ausführungsformen (31) bis (33) konkretisiert, betrifft das Verfahren zur Herstellung eines Faserverbundwerkstoffes, wobei das ethoxylierte Polyetherpolyol (ii.1) erhalten oder erhältlich ist durch Umsetzung von:

ii.1.1) einem Polyol-Starter mit einer Funktionalität von 3 bis 6, bevorzugt 3 oder 4,

mit
ii.1.2) Ethylenoxid,
in Gegenwart eines Alkoxylierungs-Katalysators (ii.1.3);
ii.1.4) gegebenenfalls weiteren Hilfs- und/oder Zusatzstoffen.

Eine bevorzugte Ausführungsform (35), welche eine der Ausführungsformen (31) bis (34) konkretisiert, betrifft das Verfahren zur Herstellung eines Faserverbundwerkstoffes, wobei das ethoxylierte Polyetherpolyol (ii.1) eine Hydroxylzahl von mehr als 300 mg KOH/g, bevorzugt von mehr als 450 mg KOH/g, weiter bevorzugt eine Hydroxylzahl im Bereich von 300 bis 1400 mg KOH/g, weiter bevorzugt im Bereich von 450 bis 1300 mg KOH/g, weiter bevorzugt im Bereich von 450 bis 1260 mg KOH/g, aufweist.

Eine bevorzugte Ausführungsform (36), welche eine der Ausführungsformen (31) bis (35) konkretisiert, betrifft das Verfahren zur Herstellung eines Faserverbundwerkstoffes, wobei das ethoxylierte Polyetherpolyol (ii.1) ein Äquivalentmolekulargewicht von weniger als 200 g/mol, bevorzugt im Bereich von 50 bis 140 g/mol, weiter bevorzugt im Bereich von 55 bis 135 g/mol, weiter bevorzugt im Bereich von 60 bis 130 g/mol, aufweist.

Eine bevorzugte Ausführungsform (37), welche eine der Ausführungsformen (31) bis (36) konkretisiert, betrifft das Verfahren zur Herstellung eines Faserverbundwerkstoffes, wobei das ethoxylierte Polyetherpolyol (ii.1) in 15 bis 100 Gewichts-%, bevorzugt in 20 bis 100 Gewichts%, weiter bevorzugt in 25 bis 75 Gewichts-%, weiter bevorzugt in 30 bis 50 Gewichts-%, bezogen auf ein Gesamtgewicht der Polyolzusammensetzung (ii) von 100 Gewichts-%, eingesetzt wird.

Eine bevorzugte Ausführungsform (38), welche eine der Ausführungsformen (31) bis (37) konkretisiert, betrifft das Verfahren zur Herstellung eines Faserverbundwerkstoffes, wobei das ethoxylierte Polyetherpolyol (ii.1) keine auf Propylenoxid-basierte Endgruppen und/oder Butylenoxid-basierte Endgruppen aufweist, bevorzugt ausschließlich auf Ethylenoxid-basierte Endgruppen aufweist.

Eine bevorzugte Ausführungsform (39), welche eine der Ausführungsformen (31) bis (38) konkretisiert, betrifft das Verfahren zur Herstellung eines Faserverbundwerkstoffes, wobei das ethoxylierte Polyetherpolyol (ii.1) ausschließlich Ethylenoxid-basierte Gruppen aufweist und keine auf Propylenoxid-basierte Gruppen und/oder Butylenoxid-basierte Gruppen enthält.

Eine bevorzugte Ausführungsform (40), welche eine der Ausführungsformen (31) bis (39) konkretisiert, betrifft das Verfahren zur Herstellung eines Faserverbundwerkstoffes, wobei der Polyol-Starter (ii.1.1) des ethoxylierten Polyetherpolyols (ii.1) ein Triol mit einer Funktionalität von 3, bevorzugt ein Triol der Formel (I)

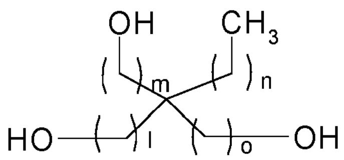

(I) ,

umfasst, wobei l, m, n und o jeweils unabhängig voneinander eine ganze Zahl aus dem Bereich von 1 bis 6 sind.

Eine bevorzugte Ausführungsform (41), welche Ausführungsform (40) konkretisiert, betrifft das Verfahren zur Herstellung eines Faserverbundwerkstoffes, wobei l, m, n und o des mindestens einen Triols (ii.1.1) der Formel (I) jeweils unabhängig voneinander eine ganze Zahl aus dem Bereich von 1 bis 3, bevorzugt l, m, n und o alle 1, sind.

Eine bevorzugte Ausführungsform (42), welche eine der Ausführungsformen (40) oder (41) konkretisiert, betrifft das Verfahren zur Herstellung eines Faserverbundwerkstoffes, wobei das Triol (ii.1.1) eine Hydroxylzahl im Bereich von 200 bis 2000 mg KOH/g, bevorzugt im Bereich von 250 bis 1850 mg KOH/g, weiter bevorzugt im Bereich von 300 bis 1850 mg KOH/g, aufweist.

Eine bevorzugte Ausführungsform (43), welche eine der Ausführungsformen (31) bis (42) konkretisiert, betrifft das Verfahren zur Herstellung eines Faserverbundwerkstoffes, wobei das ethoxylierte Polyetherpolyol (ii.1) nur durch die Umsetzung eines Polyol-Starters (ii.1.1.), insbesondere eines Triols der Formel (I), und Etylenoxid (ii.1.2) erzeugt ist und kein weiteres Alkylenoxid eingesetzt wird.

Eine bevorzugte Ausführungsform (44), welche eine der Ausführungsformen (31) bis (43) konkretisiert, betrifft das Verfahren zur Herstellung eines Faserverbundwerkstoffes, wobei das ethoxylierte Polyetherpolyol (ii.1) nur durch die Umsetzung eines Polyol-Starters (ii.1.1.), insbesondere Triols der Formel (I), und Etylenoxid (ii.1.2) erzeugt ist und kein weiterer Starter, insbesondere kein Aminbasierter Starter, eingesetzt wird.

Eine bevorzugte Ausführungsform (45), welche eine der Ausführungsformen (31) bis (44) konkretisiert, betrifft das Verfahren zur Herstellung eines Faserverbundwerkstoffes, wobei das ethoxylierte Polyetherpolyol (ii.1) auf einem

Triol basiert, bevorzugt auf einem Triol (ii.1.1) der Formel (I) gemäß einer der Ausführungsformen 8 bis 10, und weiter bevorzugt die Formel (II) aufweist,

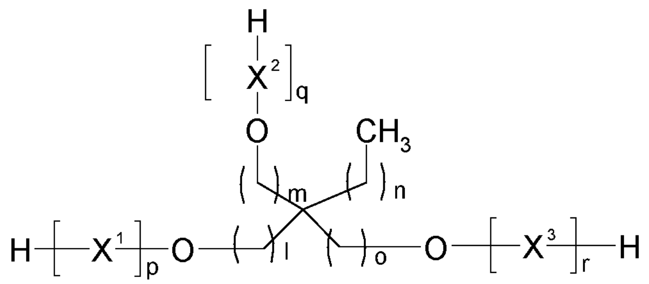

(II)

wobei

l, m, n und o jeweils unabhängig voneinander eine ganze Zahl aus dem Bereich von 1 bis 6 sind, bevorzugt l, m, n und o alle 1 sind;
p, q und r jeweils unabhängig voneinander Null oder eine ganze Zahl aus dem Bereich von 1 bis 6 sind;
und $X^1$, $X^2$ und $X^3$ jeweils eine $-CH_2-CH_2-O-$Gruppe sind.

Eine bevorzugte Ausführungsform (46), welche eine der Ausführungsformen (30) bis (45) konkretisiert, betrifft das Verfahren zur Herstellung eines Faserverbundwerkstoffes, wobei die Polyolzusammensetzung (ii) kein Polyol umfasst, welches auf einem Aminbasierten Starter basiert.

Eine bevorzugte Ausführungsform (47), welche eine der Ausführungsformen (30) bis (46) konkretisiert, betrifft das Verfahren zur Herstellung eines Faserverbundwerkstoffes, wobei das Polyurethan (a) ohne Einsatz eines Polyol erhältlich oder erhalten ist, welches auf einem Aminbasierten Starter basiert.

Eine bevorzugte Ausführungsform (48), welche eine der Ausführungsformen (30) bis (47) konkretisiert, betrifft das Verfahren zur Herstellung eines Faserverbundwerkstoffes, wobei die Polyolzusammensetzung (ii) ein oder mehr weitere(s) Polyol(e) umfasst, bevorzugt mindestens ein Polyesterpolyol, weiter bevorzugt ein aromatisches Polyesterpolyol oder ein fettchemisches Polyol, wobei das mindestens eine Polyesterpolyol, bevorzugt das aromatische Polyesterpolyol oder das fettchemische Polyol, bevorzugt eine Funktionalität aufweist im Bereich von 2 bis 3, weiter bevorzugt im Bereich von 2,4 bis 3.

Eine bevorzugte Ausführungsform (49), welche eine der Ausführungsformen (30) bis (46) konkretisiert, betrifft das Verfahren zur Herstellung eines Faserverbundwerkstoffes, wobei die Polyolzusammensetzung (ii) keine Polyole enthält, die eine Propylenoxid-Endgruppe oder Butylenoxid-Endgruppe aufweisen.

Eine bevorzugte Ausführungsform (50), welche eine der Ausführungsformen (30) bis (49) konkretisiert, betrifft das Verfahren zur Herstellung eines Faserverbundwerkstoffes, wobei die Polyolzusammensetzung (ii) weniger als 10 Gewichts-% von Polyolen enthält, die eine Propylenoxid und/oder Butylenoxidgruppe aufweisen.

Eine bevorzugte Ausführungsform (51), welche eine der Ausführungsformen (30) bis (50) konkretisiert, betrifft das Verfahren zur Herstellung eines Faserverbundwerkstoffes, wobei die Polyolzusammensetzung (ii) keine Polyole enthält, die eine Propylenoxid- oder Butylenoxidgruppe aufweisen.

Eine bevorzugte Ausführungsform (52), welche eine der Ausführungsformen (30) bis (51) konkretisiert, betrifft das Verfahren zur Herstellung eines Faserverbundwerkstoffes, wobei die Polyolzusammensetzung (ii) mindestens einen Reaktivverdünner umfasst, wobei der mindestens eine Reaktivverdünner bevorzugt eine Substanz mit mindestens einer olefinischen Gruppe, bevorzugt eine Substanz mit mindestens 2 olefinischen Gruppen, weiter bevorzugt eine Substanz mit mindestens einer endständigen olefinischen Gruppe, weiter bevorzugt mindestens 2 endständigen olefinischen Gruppen, enthält.

Eine bevorzugte Ausführungsform (53), welche eine der Ausführungsformen (30) bis (52) konkretisiert, betrifft das Verfahren zur Herstellung eines Faserverbundwerkstoffes, wobei das Polyurethan ein Epoxidharz enthält.

Eine bevorzugte Ausführungsform (54), welche Ausführungsform (53) konkretisiert, betrifft das Verfahren zur Herstellung eines Faserverbundwerkstoffes, wobei das Polyurethan das Epoxidharz in 1 bis 50 Gewichts-%, bevorzugt in 5 bis 25 Gewichts-%, enthält, jeweils bezogen auf das Gesamtgewicht der Polyolzusammensetzung (ii).

Eine bevorzugte Ausführungsform (55), welche eine der Ausführungsformen (30) bis (54) konkretisiert, betrifft das Verfahren zur Herstellung eines Faserverbundwerkstoffes, wobei die Isocyanatzusammensetzung (i) und/oder die Polyolzusammensetzung (ii), bevorzugt die Isocyanatzusammensetzung (i) und die Polyolzusammensetzung (ii) jeweils, eine Viskosität bei 25 °C von unter 1000 mPas, bevorzugt von < 500 mPas, aufweisen (ASTM D445 (25 °C))

Eine bevorzugte Ausführungsform (56), welche eine der Ausführungsformen (30) bis (55) konkretisiert, betrifft das Verfahren zur Herstellung eines Faserverbundwerkstoffes na, wobei Polyisocyanatzusammensetzung (i) und Polyolzusammensetzung (ii), bevorzugt Polyisocyanatzusammensetzung (i) und aller mit Isocyanat reaktiver Gruppen, in einem solchen Verhältnis eingesetzt werden, dass der Isocyanatindex zwischen 100 und 250 liegt.

Eine bevorzugte Ausführungsform (57), welche eine der Ausführungsformen (30) bis (56) konkretisiert, betrifft das Verfahren zur Herstellung eines Faserverbundwerkstoffes, wobei außer (i), (ii) und den Fasern (b) keine weiteren Komponenten nach dem Vermischen von (i) und (II) bzw. nach dem Zusatz von (b) zugegeben werden.

Eine bevorzugte Ausführungsform (58), welche eine der Ausführungsformen (30) bis (57) konkretisiert, betrifft das Verfahren zur Herstellung eines Faserverbundwerkstoffes, wobei weder (i) noch (ii) Urethan-, Harnstoff-, Amid-, Biuret-, Allophanat- oder Isocyanuratgruppen enthalten.

Eine bevorzugte Ausführungsform (59), welche eine der Ausführungsformen (30) bis (58) konkretisiert, betrifft das Verfahren zur Herstellung eines Faserverbundwerkstoffes, wobei (i) ein Isocyanatprepolymer enthält.

Eine bevorzugte Ausführungsform (60), welche eine der Ausführungsformen (30) bis (59) konkretisiert, betrifft das Verfahren zur Herstellung eines Faserverbundwerkstoffes, wobei weitere Hilfs- und/oder Zusatzstoffe zugesetzt werden, wobei bevorzugt die weitere Hilfs- und/oder Zusatzstoffe in der Polyolzusammensetzung (ii) enthalten sind, weiter bevorzugt der mindestens dreifunktionelle Alkohol (ii.1), der mindestens zwei primären Hydroxylgruppen, bevorzugt drei primäre Hydroxylgruppen aufweist, weiter bevorzugt das ethoxylierte Polyetherpolyol (ii.1), die weitere Hilfs- und/oder Zusatzstoffe enthält, weiter bevorzugt das ethoxylierte Polyetherpolyol (ii.1) erhalten oder erhältlich ist durch Umsetzung von einem Polyol-Starter (ii.1.1) mit einer Funktionalität von 3 bis 6, bevorzugt 3 oder 4 mit Ethylenoxid (ii.1.2), in Gegenwart eines Alkoxylierungs-Katalysators (ii.1.3) und den weiteren Hilfs- und/oder Zusatzstoffen (ii.1.4).

Eine bevorzugte Ausführungsform (61), welche eine der Ausführungsformen (30) bis (60) konkretisiert, betrifft das Verfahren zur Herstellung eines Faserverbundwerkstoffes, wobei weitere Hilfs- und/oder Zusatzstoffe zugesetzt werden, wobei bevorzugt die weitere Hilfs- und/oder Zusatzstoffe in der Isocyanatzusammensetzung (i) enthalten sind.

Eine bevorzugte Ausführungsform (62), welche eine der Ausführungsformen (30) bis (61) konkretisiert, betrifft das Verfahren zur Herstellung eines Faserverbundwerkstoffes unter Anwendung des Faserwickelverfahrens indem die Polyisocyanatzusammensetzung (i) und die Polyolzusammensetzung (ii) vermischt werden, in ein Imprägnierbad dosiert werden und dort mit den Fasern (b) in Kontakt gebracht werden, wobei die imprägnierten Fasern anschließend auf einem Wickeldorn, einem Werkzeug oder einem Bauteil abgelegt werden.

Eine bevorzugte Ausführungsform (63), welche eine der Ausführungsformen (30) bis (61) konkretisiert, betrifft das Verfahren zur Herstellung eines Faserverbundwerkstoffes unter Anwendung des Long-Fiber-Injection-Verfahrens indem die Polyisocyanatzusammensetzung (i) und die Polyolzusammensetzung (ii) vermischt werden, in das Reaktionsgemisch, vorzugsweise am Mischkopf, geschnittene Fasern (b) rieseln und das Material danach in ein Formwerkzeug und/oder auf ein Trägermaterial gesprüht und dort anschließend ausgehärtet wird.

Eine bevorzugte Ausführungsform (64), welche eine der Ausführungsformen (30) bis (61) konkretisiert, betrifft das Verfahren zur Herstellung eines Faserverbundwerkstoffes unter Anwendung des Fasersprüh-Verfahrens indem die Polyisocyanatzusammensetzung (i) und die Polyolzusammensetzung (ii) vermischt werden, und das Reaktionsgemisch mit Fasern in Kontakt gebracht und anschließend ausgehärtet wird.

Eine bevorzugte Ausführungsform (65), welche eine der Ausführungsformen (30) bis (61) konkretisiert, betrifft das Verfahren zur Herstellung eines Faserverbundwerkstoffes unter Anwendung des Pultrusions-Verfahrens indem die Polyisocyanatzusammensetzung (i) und die Polyolzusammensetzung (ii) vermischt werden, das Reaktionsgemisch in eine geschlossenen Imprägniervorrichtung dosiert wird, in der sie in Kontakt mit endlosen, orientieren Fasern und/oder Fasermatten (b) kommt, die kontinuierlich durch ein Formwerkzeug gezogen und dann ausgehärtet werden.

Eine bevorzugte Ausführungsform (66), welche eine der Ausführungsformen (30) bis (61) konkretisiert, betrifft das Verfahren zur Herstellung eines Faserverbundwerkstoffes unter Anwendung des RTM-Verfahrens, indem die Polyisocyanatzusammensetzung (i) und die Polyolzusammensetzung (ii) vermischt werden, in ein zumindest teilweise evakuiertes Werkzeug dosiert werden, in dem zuvor ein Preform aus Fasern (b) eingelegt wurde, und anschließend im Formwerkzeug ausgehärtet wird.

Eine bevorzugte Ausführungsform (67), welche eine der Ausführungsformen (30) bis (61) konkretisiert, betrifft das Verfahren zur Herstellung eines Faserverbundwerkstoffes zur Herstellung eines SMC (sheet moulding compound), indem die Polyisocyanatzusammensetzung (i) und die Polyolzusammensetzung (ii) vermischt werden, auf mindestens eine von zwei Trägerfolien aufgebracht werden, mit Verstärkungsfasern in Kontakt gebracht werden, die beiden Trägerfolien zu einem Sandwich zusammengeführt und gewalzt werden, wobei, die SMC- optional geschnitten in Stapeln oder aufgerollt gelagert werden, wobei optional nach Entfernen der Trägerfolie eine oder mehrere der SMC-Teile in einem Presswerkzeug zum Bauteil konsolidiert und ausgehärtet werden.

Eine bevorzugte Ausführungsform (68), welche eine der Ausführungsformen (30) bis (61) konkretisiert, betrifft das Verfahren zur Herstellung eines Faserverbundwerkstoffes zur Herstellung von mit Polyurethan vorimprägnierten Fasern bzw. Textilien (Polyurethan-Prepregs) indem die Polyisocyanatzusammensetzung (i) und die Polyolzusammensetzung (ii) vermischt werden, mit den orientierten Fasern (b) in Kontakt gebracht und anschließend partiell ausgehärtet

werden.

Eine bevorzugte Ausführungsform (69), welche eine der Ausführungsformen (30) bis (61) konkretisiert, betrifft das Verfahren zur Herstellung eines Faserverbundwerkstoffes zur Herstellung von mit Polyurethan vorimprägnierten Fasern bzw. Textilien (Polyurethan-Prepregs) indem die Polyisocyanatzusammensetzung (i) und die Polyolzusammensetzung (ii) vermischt werden, bei einer Temperatur von unterhalb 80°C polymerisiert werden, und anschließend mit den orientierten Fasern (b) in Kontakt gebracht werden.

Eine Ausführungsform (70) der Erfindung betrifft einen Faserverbundwerkstoff erhalten oder erhältlich nach dem Verfahren gemäß einer der Ausführungsformen (30) bis (69).

Eine Ausführungsform (71) der Erfindung betrifft eine Verwendung eines Faserverbundwerkstoffes gemäß einer der Ausführungsformen (1) bis (29) oder eines Faserverbundwerkstoffes erhalten oder erhältlich nach dem Verfahren gemäß einer der Ausführungsformen (30) bis (69) für die Herstellung eines Rohres, insbesondere eines konischen Rohres, eines Rohrverbindungsstückes, eines Druckbehälters, eines Lagertanks, eines Isolators, eines Mastes, eines Stabs, einer Walze, einer Torsionswelle, eines Profils, eines Sportgerätes, eines Formteils, einer Abdeckung, eines Automobil-Außenteiles, eines Seils, eines Taus, einer Isogridstruktur, oder eines textilen Halbzeugs.

Die nachfolgenden Beispiele dienen der Veranschaulichung der Erfindung, sind aber in keiner Weise einschränkend hinsichtlich des Gegenstands der vorliegenden Erfindung.

## BEISPIELE

1. Chemikalien

| **Abkürzung** | **Chemische Bezeichung** |
|---|---|
| Polyol 1 | Propoxyliertes Glycerin (Glycerin-PO) OHZ 805 mg KOH/g, Viskosität 1275 mPa s [25°C], |
| Polyol 2 | Rizinusöl |
| Polyol 3 | Verzweigter Polyether/Polyester, nicht EO-haltig, OHZ 170 mg KOH/g, Viskosität 3500 mPas [25°C] |
| Polyol 4 | Trimethylolpropan (TMP)-gestartetes ethoxyliertes Polyol mit OH-Zahl (OHZ) 935 mg KOH/g, hergestellt mit KOH als Katalysator für die Ethoxylierung |
| Polyol 5 | Propoxyliertes Propylenglykol, OHZ 248 mg KOH/g, Viskosität 75 mPa s [25°C] |
| Polyol 6 | Trimethylolpropan, OHZ1250 |
| Polyol 7 | Verzweigter Polyether/Polyester, nicht EO-haltig, OHZ 315, Viskosität 1000 mPas [25°C] |
| Katalysator 1 | 40 Gew.-%ige Lösung von Kaliumacetat in Dipropylenglykol (DPG) |
| Katalysator 2 | Phenol geblocktes DBU |
| Katalysator 3 | LiCl-basierte Zusamensetzung, KX 146, BASF SE |
| Entschäumer 1 | Xiameter ACP 1000 Antifoam Compound |
| Zeolith 1 | Zeolith in Rizinusöl dispergiert |
| Isocyanat 1 | Zusammensetzung umfassend 50 Gewichts-% Carbodiimidmodifiziertes Diphenylmethan-4,4-diisocyanat (mittlere Funktionalität 2,2, NCO-Gehalt 29,5 g/100 g) und 50 Gewichts-% IsocyanatPrepolymer basierend auf Diphenylmethan-4,4-diisocyanat, einem Polyetherpolyol (22,4-23,4 g/100 g) und Dipropylenglykol |
| Isocyanat 2 | Zusammensetzung umfassend 99,9 Gewichts-% IsocyanatPrepolymer basierend auf Diphenylmethan-4,4-diisocyanat, einem Polyetherpolyol (22,4-23,4 g/100 g) und Dipropylenglykol und 0,1 Gewichts-% Dibis |
| Isocyanat 3 | Zusammensetzung umfassend 97,9 Gewichts-% IsocyanatPrepolymer basierend auf Diphenylmethan-4,4-diisocyanat, einem Polyetherpolyol (22,4-23,4 g/100 g) und Dipropylenglykol, 2 Gewichts-% Katalysator 3 und 0,1 Gewichts-% Dibis |

(fortgesetzt)

| Abkürzung | Chemische Bezeichung |
|---|---|
| Isocyanat 4 | Zusammensetzung umfassend 49,95 Gewichts-% polymeres Diphenylmethan-4,4-diisocyanat, 24,95 Gewichts-% Diphenylmethan-2,4-diisocyanat, 25 Gewichts-% L Diphenylmethan-4,4-diisocyanat und 0,1 Gewichts-% Dibis |
| TMPTA | 1, 1, 1-Trihydroxymethylpropyltriacrylat |
| Dibis | Oxydiethylenbis(chlorformiat) |
| Epoxidharz 1 | Epoxidharz basierend auf Bisphenol A und Epichlorhydrin, Epoxidäquivalentgewicht 190 g/Äq, bestimmt nach ASTM D-1652. Viskosität bei 25 °C: 12-14 Pa.s bestimmt gemäß ASTM D445 |

**2. Prüfmethoden**

Shore-Härteprüfung D nach DIN ISO 7619-1
3-Punkt-Biegeversuch nach DIN EN ISO 178
Zugfestigkeit nach DIN EN ISO 527
Reissdehnung: nach DIN EN ISO 527
Charpy Schlagzähigkeit (flatwise) nach DIN EN ISO 179-1/1fU
Wärmeformbeständigkeit: HDT-B-f, flachkant bei 0,45 MPa nach DIN EN ISO 75
Hydroxylzahl (OH-Zahl, OHZ): DIN 53240
Gehalt an Epoxygruppen: SMS 2026
Viskosität: ASTM D445 (25 °C)
Schrumpf: Polyol und Isocyanat werden bei Raumtemperatur vermischt und das
Reaktionsgemisch wird in eine metallische Form der Dimension 1000 mm X 20 mm X 10 mm gegossen. Überschüssiges Material wird mit einem Rakel entfernt. Das Reaktionsgemisch wird 1 Stunde bei 80 °C und 2 Stunden bei 120 °C ausgehärtet. Nach Abkühlen auf Raumtemperatur wird das Teil entformt. Die Länge des Prüfstabs wird ins Verhältnis gesetzt zur Länge der Form.

**3. Herstellung von Prüfplatten aus Polyurethan zur Bestimmung der mechanischen Eigenschaften (Beispiele 1 bis 5 und Vergleichsbeispiele 1 bis 3)**

Zusammensetzung der Polyurethane der Beispiele 1 bis 5 und der Vergleichsbeispiele 1 bis 3 entsprechend der Angaben in Tabelle 1. Alle Ausgangsstoffe außer dem Isocyanat (Übliche Ansatzgröße: 300 g Polyolzusammensetzung) wurden bei Raumtemperatur unter Vakuum vermischt, danach erfolgten die Zugabe des Isocyanats und das Vermischen für 60 s im Speedmixer (FA Hauschild), anschließend wurde Reaktionsgemischs in eine Metallform 20X30X0,4 cm bzw. 20X30X0,2 cm, vergossen, gefolgt von Abstreifen des überschüssigen Harzes mit einem Rakel und Aushärten bei 80°C für 1 h, danach für 2 h bei 120 °C und für 2 h bei 180 °C. Aus dem Material wurden anschließend nach 1 Woche Lagerung bei Raumtemperatur Prüfkörper gefräst.

**4. Herstellung eines Faserverbundwerkstoffes aus Polyurethan und Glasfasern mittels Faserwicklungsprozess (Filament Winding Prozess) zur Bestimmung der Blasenbildungstendenz bei 80% Luftfeuchtigkeit (Beispiele 1 bis 5und Vergleichsbeispiele 1 bis 3)**

Zusammensetzung der Polyurethane der Beispiele 1 bis 5 und der Vergleichsbeispiele 1 bis 3 entsprechend der Angaben in Tabelle 1. Es wurde eine konventionelle Faserwicklungsanlage (Filament Winding Anlage) verwendet, die sich innerhalb einer Einhausung mit Absaugung befand. Über einen Luftbefeuchter konnte innerhalb der Kabine die gewünschte Luftfeuchtigkeit eingestellt wurden. Es wurde eine Spule (Bobbin) mit Endlosglasfasern verwendet, die innerhalb der Kabine gelagert wurde. Die Glasfasern wurden durch das noch ungefüllte Tränkbad geführt, dann über den Ablagekopf auf einen Dorn abgelegt. Der Dorn wurde an beiden Enden in die Drehvorrichtung eingespannt. Das Tränkbad und der Ablagekopf befanden sich auf einem Schlitten, mittels dessen Fasern auf der Länge des Dorns abgelegt werden können. Die Bewegung des Schlittens, die Drehung des Dorns und der beabsichtigte Ablagewinkel der Fasern auf dem Dorn als Funktion der Zeit wurde programmiert und dann durch die Wickelsoftware gesteuert. Als Glasfaser wurde verwendet SE3030 der Firma 3B (borfreie Glasfaser, Filamentdurchmesser 17 µm, Tex 2400 (g/km)). Als Wickelmuster wurde gewählt: 2 Umfangslagen, eine Lage +/- 45° und zwei Umfangslagen. Die Versuche wurden

durchgeführt bei einer Temperatur von 25°C und einer Luftfeuchtigkeit von 85 %. Das Harztränkbad wurde auf 20°C temperiert. Zu Beginn des Versuchs wurden alle Ausgangsstoffe außer dem Isocyanat (Übliche Ansatzgröße: 100 g Polyolzusammensetzung) bei Raumtemperatur vermischt, danach erfolgten die Zugabe des Isocyanats und das Vermischen für 60 s im Speedmixer (FA Hauschild). Anschließend wurde das Material in das Tränkbad gefü llt. Danach wurde das Vorgarn (der Roving) manuell so weit gezogen, bis der mit Harz imprägnierte Roving auf den Dorn abgelegt und dort fixiert werden konnte. Danach wurde das Wickelprogramm gestartet und mehrere Lagen Polyurethangetränkte Glasfasern wurden auf dem Dorn abgelegt. Nach Abschluss des Wickelvorgangs wurde die Glasfaser durchtrennt und man ließ das Material für 1 Stunde bei Raumtemperatur in der Kabine aushärten. Anschließend erfolgte die Härtung für 1 Stunde bei 80°C und für 2 Stunden bei 120°C.

Die Qualität der Bauteiloberfläche wurde optisch bewertet:

1: glatte Oberfläche ohne Mikroblasen
2: relativ glatte Oberfläche mit wenigen Mikroblasen
3: große Anzahl an Mikroblasen
4: Rauhe, schaumartige Bauteiloberfläche
5: viele Luftblasen mit Durchmesser > 1mm, weiße, schaumartige Bauteiloberfläche

Tabelle 1

Zusammensetzung der Polyurethane der Beispiele 1 bis 5 und der Vergleichsbeispiele 1 bis 3 und deren Eigenschaften

| | Vergleichsbeispiel 1 | Beispiel 1 | Vergleichsbeispiel 2 | Beispiel 2 | Beispiel 3 | Beispiel 4 | Beispiel 5 | Vergleichsbeispiel 3 |
|---|---|---|---|---|---|---|---|---|
| Polyol 1 [Gewichts-%] | 96,8 | 0 | 15 | 0 | 0 | 0 | 0 | 0 |
| Polyol 2 [Gewichts-%] | 0 | 0 | 36,7 | 20 | 0 | 0 | 0 | 55,9 |
| Polyol 3 [Gewichts-%] | 0 | 69,8 | 0 | 0 | 0 | 0 | 0 | |
| Polyol 4 [Gewichts-%] | 0 | 20 | 0 | 29,8 | 33,9 | 0 | 17,9 | 14 |
| Polyol 5 [Gewichts-%] | 0 | 0 | 15 | 0 | 0 | 0 | 0 | 0 |
| Polyol 6 [Gewichts-%] | 0 | 0 | 0 | 0 | 0 | 30,6 | 0 | 0 |
| Polyol 7 [Gewichts-%] | 0 | 0 | 0 | 0 | 0 | 0 | 40 | 0 |

| | Vergleichsbeispiel 1 | Beispiel 1 | Vergleichsbeispiel 2 | Beispiel 2 | Beispiel 3 | Beispiel 4 | Beispiel 5 | Vergleichsbeispiel 3 |
|---|---|---|---|---|---|---|---|---|
| TMPTA [Gewichts-%] | 0 | 0 | 30 | 40 | 40 | 66,2 | 32 | 10 |
| Epoxidharz 1 | 0 | 0 | 0 | 0 | 16 | 0 | 0 | 10 |
| Katalysator 1 [Gewichts-%] | 0 | 0 | 0,1 | 0 | 0 | | 0 | 0 |
| Katalysator 2 [Gewichts-%] | 0 | 0 | 0 | 0,1 | 0 | 0 | 0 | 0 |
| Entschäumer 1 [Gewichts-%] | 0,2 | 0,2 | 0,2 | 0,1 | 0,1 | 0,2 | 0,1 | 0,1 |
| Zeolith 1 [Gewichts-%] | 3 | 10 | 3 | 10 | 10 | 3 | 10 | 10 |
| Isocyanat 1 [Gewichts-%] | 268 | 0 | 137 | 0 | 0 | 111 | 110,6 | 0 |
| Isocyanat 2 [Gewichts-%] | 0 | 0 | 0 | 127 | 0 | 0 | 0 | 0 |
| Isocyanat 3 [Gewichts-%] | 0 | 0 | 0 | 0 | 176,0 | 0 | 0 | 98 |
| Isocyanat 4 [Gewichts-%] | 0 | 80 | 0 | 0 | 0 | 0 | 0 | 0 |
| Isocyanat-Index* | 120 | 110 | 120 | 120 | 160 | 102 | 140 | 180 |
| Shore D | 85 | 81 | 82 | 83 | 87 | 87 | 87 | 82 |
| Biegefestigkeit [MPa] | 78 | 101 | 114 | 129 | 139 | 67 | 127 | 97 |
| Zugfestigkeit [MPa] | 35 | 60 | 64 | 84 | 63 | 24 | 77 | 56 |
| Reissdehnung [%] | 2 | 11 | 6 | 8 | 3 | 1 | 6 | 9 |
| Zug-E-Modul [MPa] | 3211 | 2350 | 2960 | 3660 | 3000 | 3100 | 2745 | 2036 |
| Charpy-Schlagzähigkeit | 9,3 | 62,5 | 21 | 44 | 39 | 7 | 30 | 33 |
| Wärmeformbeständigkeit HDT-B-f | 108 | 70 | 115 | 118 | 136 | 155 | 126 | 86 |
| Schrumpf [%] | 0,9 | 0,9 | 0,8 | 0,9 | 0,9% | 1,0 | 0,8 | 0,9 |
| Blasenbildungstendenz Wickelversuch (25°C, 85% Luftfeuchtigkeit) | Stark (4) | Fast keine (1-2) | Stark (4) | Fast keine (1-2) | Fast keine (1-2) | Fast keine (1-2) | Keine (1) | Fast keine (1-2) |

* Isocyanat-Index rechnerisch bestimmt aus den Gewichts-% bzw. Mengen der eingesetzten Komponenten unter Berücksichtigung von deren Funktionalitäten

Es konnte gezeigt werden, dass der Einsatz von mindestens 15 Gewichts-% an mindestens dreifunktionellen Alkoholen, welche mindestens zwei primären Hydroxylgruppen, bevorzugt drei primäre Hydroxylgruppen aufweisen, insbesondere von ethoxylierten Polyolen, d.h. Polyolen, welche reaktive primäre Hydroxylgruppen aufwiesen, im Wickelversuch zu deutlich besseren Ergebnissen im Hinblick auf die Vermeidung einer unerwünschten Blasenbildung führte: die Polyurethane auf Basis von mindestens 15 Gewichts-% an mindestens dreifunktionellen Alkoholen, welche mindestens zwei primären Hydroxylgruppen, bevorzugt drei primäre Hydroxylgruppen aufweisen, bzw. mindestens 15 Gewichts-% an ethoxylierten Polyolen, zeigten im Wickelversuch trotz hoher Luftfeuchtigkeit von 85 % keine bis maximal eine sehr geringe Blasenbildung, wohingegen der Einsatz von propoxylierten Polyolen bzw. weniger als 15 Gewichts-% an den oben genannten Polyolen zum Schäumen führte, d.h. sich unerwünschte Blasen bildeten. Die Beispiele und Vergleichsbeispiele zeigen, dass es neben der besseren Verarbeitbarkeit im Wickelverfahren bezüglich aller betrachteter mechanischer Eigenschaften Vorteile gibt, insbesondere bei der Schlagzähigkeit.

Überraschenderweise konnte auch gezeigt werden, dass ein hoher Isocyanatindex eingesetzt werden kann. Üblicherweise würde der Fachmann den Index so wählen, dass bei einem offenen Wickelprozess kein oder nur ein minimaler Isocyanatüberschuss vorliegt (Isocyanatindex 100-120). Ein hoher Isocyanatindex erhöht nach allgemeiner Meinung das Risiko, dass es im Laufe der Produktion zu unerwünschten Reaktionen des Isocyanats mit Luftfeuchtigkeit kommt. Überraschenderweise wurde gefunden, dass die erfindungsgemäße Polyolzusammensetzung es möglich macht, einen hohen Isocyanatüberschuss einzusetzen (Index zwischen 99 und 400, bevorzugt zwischen 100 und 250).

Die Beispiele und Vergleichsbeispiele zeigen, dass bei Verwendung der erfindungsgemäße Polyolzusammensetzung auch bezüglich eines höheren Index überraschenderweise verbesserte Eigenschaften erhalten werden - insbesondere bezüglich Wärmeformbeständigkeit - und trotz hohem Index überraschenderweise die Verarbeitbarkeit/Blasenbildungstendenz ausgezeichnet ist.

**Angeführte Literatur**

WO 03/085022 A1

WO 2016/183073 A1

M. Ionescu, Chemistry and Technology of Polyols, Rapra, 2005, S. 67-75WO 18/036943 A WO 19/025439 A1

"Kunststoffhandbuch, Band 7, Polyurethane", Carl Hanser Verlag, 3. Auflage 1993, Kapitel 3.4.4 und 3.4.6 bis 3.4.11

DE 102008021980 A1

WO 2009/115540 A1

Thomas Brock, Michael Groteklaes, Peter Mischke: Lehrbuch der Lacktechnologie. Hrsg.: Ulrich Zorll, 2. Auflage, Vincentz Verlag, Hannover 2000, ISBN 978-3-87870-569-7, Kap. 2.4.2.1, Entschäumer und Entlüfter, S. 169 ff.

"Handbook of Epoxy resins" von Henry Lee und Kris Neville, McGraw-Hill Book Company, 1967 WO 2014/170252 A1

WO 2018/219756 A1

L. J. Gibson M.F. Ashby Cellular solids, Cambridge press, 2. Auflage, 1997, Seiten 54-56

WO 2017/100991 A1

WO 2009/115540 A1


**Patentansprüche**

1. Faserverbundwerkstoff umfassend die folgenden Komponenten:

    a) ein Polyurethan, erhalten oder erhältlich durch Umsetzung mindestens der Komponenten:

        i) eine Polyisocyanatzusammensetzung;

        ii) eine Polyolzusammensetzung, umfassend mindestens 15 Gewichts-% eines mindestens dreifunktionellen Alkohols (ii.1), der mindestens zwei primären Hydroxylgruppen aufweist, und weniger als 10 Gewichts-% von Polyolen, die eine Propylenoxid und/oder Butylenoxid-basierten Endgruppe aufweisen;

    b) Fasern, welche zumindest teilweise in das kompakte Polyurethan eingebettet vorliegen;

    wobei Polyisocyanatzusammensetzung (i) und Polyolzusammensetzung (ii) in einem solchen Verhältnis eingesetzt werden, dass der Isocyanatindex zwischen 99 und 400 liegt.

2. Faserverbundwerkstoff nach Anspruch 1 umfassend die folgenden Komponenten:

a) ein Polyurethan, erhalten oder erhältlich durch Umsetzung mindestens der Komponenten:

i) eine Polyisocyanatzusammensetzung;
ii) eine Polyolzusammensetzung, umfassend mindestens 15 Gewichts-% des ethoxylierten Polyetherols (ii.1);

b) Fasern, welche zumindest teilweise in das kompakte Polyurethan eingebettet vorliegen.

3. Faserverbundwerkstoff nach Anspruch 2, wobei das ethoxylierte Polyetherpolyol (ii.1) erhalten oder erhältlich ist durch Umsetzung von:

ii.1.1) einem Polyol-Starter mit einer Funktionalität von 3 bis 6, bevorzugt 3 oder 4, mit
ii.1.2) Ethylenoxid,
in Gegenwart eines Alkoxylierungs-Katalysators (ii.1.3);
ii.1.4) gegebenenfalls weiteren Hilfs- und/oder Zusatzstoffen.

4. Faserverbundwerkstoff nach Anspruch 2 oder 3, wobei das ethoxylierte Polyetherpolyol (ii.1) keine auf Propylenoxid-basierte Endgruppen und/oder Butylenoxid-basierte Endgruppen aufweist, bevorzugt ausschließlich auf Ethylenoxid-basierte Endgruppen aufweist und/oder wobei das ethoxylierte Polyetherpolyol (ii.1) ausschließlich Ethylenoxid-basierte Gruppen aufweist und keine auf Propylenoxid-basierte Gruppen und/oder Butylenoxid-basierte Gruppen enthält.

5. Faserverbundwerkstoff nach einem der Ansprüche 2 bis 4, wobei der Polyol-Starter (ii.1.1) des ethoxylierten Polyetherpolyols (ii.1) ein Triol mit einer Funktionalität von 3, bevorzugt ein Triol der Formel (I)

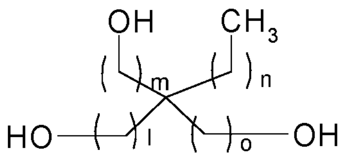

(I)

umfasst, wobei l, m, n und o jeweils unabhängig voneinander eine ganze Zahl aus dem Bereich von 1 bis 6 sind.

6. Faserverbundwerkstoff nach einem der Ansprüche2 bis 5, wobei das ethoxylierte Polyetherpolyol (ii.1) nur durch die Umsetzung eines Polyol-Starters (ii.1.1.), insbesondere eines Triols der Formel (I) gemäß Anspruch 3, und Etylenoxid (ii.1.2) erzeugt ist und kein weiteres Alkylenoxid eingesetzt wird und/oder wobei das ethoxylierte Polyetherpolyol (ii.1) nur durch die Umsetzung eines Polyol-Starters (ii.1.1.), insbesondere Triols der Formel (I), und Etylenoxid (ii.1.2) erzeugt ist und kein weiterer Starter, insbesondere kein Aminbasierter Starter, eingesetzt wird.

7. Faserverbundwerkstoff nach einem der Ansprüche 2 bis 6, wobei das ethoxylierte Polyetherpolyol (ii.1) auf einem Triol basiert, bevorzugt auf einem Triol (ii.1.1) der Formel

(I) nach Anspruch 3 oder 4, und weiter bevorzugt die Formel (II) aufweist,

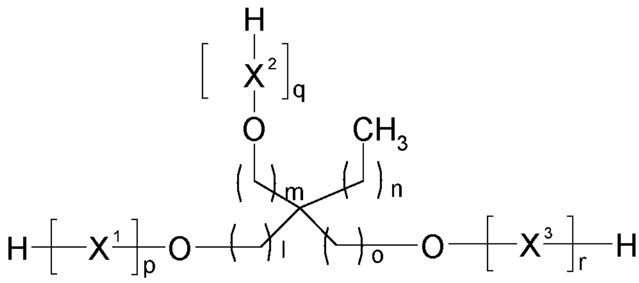

(II) ,

wobei

l, m, n und o jeweils unabhängig voneinander eine ganze Zahl aus dem Bereich von 1 bis 6 sind, bevorzugt l, m, n und o alle 1 sind;
p, q und r jeweils unabhängig voneinander Null oder eine ganze Zahl aus dem Bereich von 1 bis 6 sind; und $X^1$, $X^2$ und $X^3$ jeweils eine $-CH_2-CH_2-O-$Gruppe sind.

**8.** Faserverbundwerkstoff nach einem der Ansprüche 1 bis 7, wobei die Polyolzusammensetzung (ii) keine Polyole enthält, die eine Propylenoxid-Endgruppe oder Butylenoxid-Endgruppe aufweisen und/oder wobei die Polyolzusammensetzung (ii) weniger als 10 Gewichts-% von Polyolen enthält, die eine Propylenoxid und/oder Butylenoxidgruppe aufweisen.

**9.** Faserverbundwerkstoff nach einem der Ansprüche 1 bis 8, wobei die Polyolzusammensetzung (ii) keine Polyole enthält, die eine Propylenoxid- oder Butylenoxidgruppe aufweisen und/oder wobei die Polyolzusammensetzung (ii) keine auf Propylenoxid und/oder Butylenoxid-basierten Polyole enthält.

**10.** Verfahren zur Herstellung eines Faserverbundwerkstoffes, insbesondere zur Herstellung eines Faserverbundwerkstoffes nach einem der Ansprüche 1 bis 9, umfassend die Schritte:

A) Bereitstellen einer Polyisocyanatzusammensetzung (i);
B) Bereitstellen einer Polyolzusammensetzung (ii), umfassend mindestens 15 Gewichts-% eines mindestens dreifunktionellen Alkohols (ii.1), der mindestens zwei primären Hydroxylgruppen aufweist, und weniger als 10 Gewichts-% von Polyolen, die eine Propylenoxid und/oder Butylenoxid-basierten Endgruppe aufweisen;
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes

wobei Polyisocyanatzusammensetzung (i) und Polyolzusammensetzung (ii) in einem solchen Verhältnis eingesetzt werden, dass der Isocyanatindex zwischen 99 und 400 liegt.

**11.** Verfahren zur Herstellung eines Faserverbundwerkstoffes nach Anspruch 10 umfassend die Schritte:

A) Bereitstellen einer Polyisocyanatzusammensetzung (i);
B) Bereitstellen einer Polyolzusammensetzung (ii), umfassend mindestens 15 Gewichts-%, des ethoxylierten Polyetherpolyols (ii.1) und weniger als 10 Gewichts-% von Polyolen, die eine Propylenoxid und/oder Butylenoxid-basierten Endgruppe aufweisen;
C) Vermischen von Polyisocyanatzusammensetzung (i) und Polyolzusammensetzung (ii) unter Erhalt eines Polyurethanreaktionsgemisches (a');
D) Ausreagieren des Polyurethanreaktionsgemisches (a') in Gegenwart von Fasern (b) zum Polyurethan (a), wobei die Fasern (b) zumindest teilweise in das Polyurethanreaktionsgemisch (a') bzw. in das Polyurethan (a) eingebettet vorliegen, unter Erhalt eines Faserverbundwerkstoffes,

wobei Polyisocyanatzusammensetzung (i) und Polyolzusammensetzung (ii) in einem solchen Verhältnis eingesetzt

werden, dass der Isocyanatindex zwischen 99 und 400 liegt.

**12.** Verfahren zur Herstellung eines Faserverbundwerkstoffes nach Anspruch 10 oder 11 zur Herstellung von mit Polyurethan vorimprägnierten Fasern bzw. Textilien (Polyurethan-Prepregs) indem die Polyisocyanatzusammensetzung (i) und die Polyolzusammensetzung (ii) vermischt werden, mit orientierten Fasern (b) in Kontakt gebracht und anschließend partiell ausgehärtet werden.

**13.** Verfahren zur Herstellung eines Faserverbundwerkstoffes nach Anspruch 10 oder 11 zur Herstellung von mit Polyurethan vorimprägnierten Fasern bzw. Textilien indem die Polyisocyanatzusammensetzung (i) und die Polyolzusammensetzung (ii) vermischt werden, bei einer Temperatur von unterhalb 80°C polymerisiert werden, und anschließend mit orientierten Fasern (b) in Kontakt gebracht werden.

**14.** Faserverbundwerkstoff erhalten oder erhältlich nach dem Verfahren nach einem der Ansprüche 10 bis 13.

**15.** Verwendung eines Faserverbundwerkstoffes nach einem der Ansprüche 1 bis 9 oder eines Faserverbundwerkstoffes erhalten oder erhältlich nach dem Verfahren nach einem der Ansprüche 10 bis 13 für die Herstellung eines Rohres, insbesondere eines konischen Rohres, eines Rohrverbindungsstückes, eines Druckbehälters, eines Lagertanks, eines Isolators, eines Mastes, eines Stabs, einer Walze, einer Torsionswelle, eines Profils, eines Sportgerätes, eines Formteils, einer Abdeckung, eines Automobil-Außenteiles, eines Seils, eines Taus, einer Isogridstruktur, oder eines textilen Halbzeugs.

**Claims**

**1.** A fiber composite material comprising the following components:

a) a polyurethane obtained or obtainable by reaction of at least the components:

i) a polyisocyanate composition;
ii) a polyol composition comprising at least 15% by weight of an at least trifunctional alcohol (ii.1), which exhibits at least two primary hydroxyl groups, and less than 10% by weight of polyols which exhibit an end group based on propylene oxide and/or butylene oxide;

b) fibers which are at least partially embedded in the compact polyurethane;

wherein polyisocyanate composition (i) and polyol composition (ii) are used in such a ratio that the isocyanate index is between 99 and 400.

**2.** The fiber composite material according to claim 1, comprising the following components:

a) a polyurethane obtained or obtainable by reaction of at least the components:

i) a polyisocyanate composition;
ii) a polyol composition comprising at least 15% by weight of the ethoxylated polyetherol (ii.1);

b) fibers which are at least partially embedded in the compact polyurethane.

**3.** The fiber composite material according to claim 2, wherein the ethoxylated polyether polyol (ii.1) is obtained or obtainable by reaction of:

ii.1.1) a polyol initiator with a functionality of 3 to 6, preferably 3 or 4,
with
ii.1.2) ethylene oxide,
in the presence of an alkoxylation catalyst (ii.1.3);
ii.1.4) optionally further auxiliaries and/or additives.

**4.** The fiber composite material according to claim 2 or 3, wherein the ethoxylated polyether polyol (ii.1) exhibits no end groups based on propylene oxide and/or end groups based on butylene oxide, preferably exhibits exclusively

end groups based on ethylene oxide, and/or wherein the ethoxylated polyether polyol (ii.1) exhibits exclusively groups based on ethylene oxide and comprises no groups based on propylene oxide and/or groups based on butylene oxide.

**5.** The fiber composite material according to any of claims 2 to 4, wherein the polyol initiator (ii.1.1) of the ethoxylated polyether polyol (ii.1) comprises a triol with a functionality of 3, preferably a triol of the formula (1)

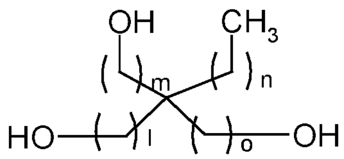

(I) ,

where l, m, n and o are each independently of one another an integer from the range from 1 to 6.

**6.** The fiber composite material according to any of claims 2 to 5, wherein the ethoxylated polyether polyol (ii.1) is produced only by the reaction of a polyol initiator (ii.1.1.), in particular a triol of the formula (I) according to claim 3, and ethylene oxide (ii.1.2), and no further alkylene oxide is used, and/or wherein the ethoxylated polyether polyol (ii.1) is produced only by the reaction of a polyol initiator (ii.1.1.), in particular triol of the formula (I), and ethylene oxide (ii.1.2), and no further initiator, in particular no amine-based initiator, is used.

**7.** The fiber composite material according to any of claims 2 to 6, wherein the ethoxylated polyether polyol (ii.1) is based on a triol, preferably on a triol (ii.1.1) of the formula (I) according to claim 3 or 4, and more preferably exhibits the formula (II)

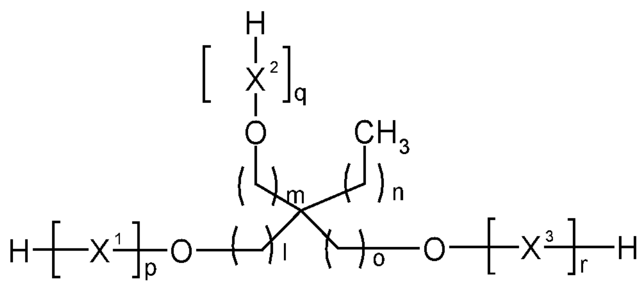

(II) ,

where

l, m, n and o are each independently of one another an integer from the range from 1 to 6; preferably, l, m, n and o are all 1;
p, q and r are each independently of one another zero or an integer from the range from 1 to 6;
and $X^1$, $X^2$ and $X^3$ are each a $-CH_2-CH_2-O-$ group.

**8.** The fiber composite material according to any of claims 1 to 7, wherein the polyol composition (ii) comprises no polyols which exhibit a propylene oxide end group or butylene oxide end group and/or wherein the polyol composition (ii) comprises less than 10% by weight of polyols which exhibit a propylene oxide and/or butylene oxide group.

**9.** The fiber composite material according to any of claims 1 to 8, wherein the polyol composition (ii) comprises no polyols which exhibit a propylene oxide or butylene oxide group and/or wherein the polyol composition (ii) comprises no polyols based on propylene oxide and/or butylene oxide.

**10.** A process for the production of a fiber composite material, in particular for the production of a fiber composite material according to any of claims 1 to 9, comprising the steps:

A) providing a polyisocyanate composition (i);
B) providing a polyol composition (ii) comprising at least 15% by weight of an at least trifunctional alcohol (ii.1), which exhibits at least two primary hydroxyl groups, and less than 10% by weight of polyols which exhibit an end group based on propylene oxide and/or butylene oxide;
C) mixing polyisocyanate composition (i) and polyol composition (ii) to obtain a polyurethane reaction mixture (a');
D) reacting the polyurethane reaction mixture (a') in the presence of fibers (b) to give the polyurethane (a), the fibers (b) being at least partially embedded in the polyurethane reaction mixture (a') or in the polyurethane (a), to obtain a fiber composite material,

wherein polyisocyanate composition (i) and polyol composition (ii) are used in such a ratio that the isocyanate index is between 99 and 400.

**11.** The process for the production of a fiber composite material according to claim 10, comprising the steps:

A) providing a polyisocyanate composition (i);
B) providing a polyol composition (ii) comprising at least 15% by weight of the ethoxylated polyether polyol (ii.1) and less than 10% by weight of polyols which exhibit an end group based on propylene oxide and/or butylene oxide;
C) mixing polyisocyanate composition (i) and polyol composition (ii) to obtain a polyurethane reaction mixture (a');
D) reacting the polyurethane reaction mixture (a') in the presence of fibers (b) to give the polyurethane (a), the fibers (b) being at least partially embedded in the polyurethane reaction mixture (a') or in the polyurethane (a), to obtain a fiber composite material,

wherein polyisocyanate composition (i) and polyol composition (ii) are used in such a ratio that the isocyanate index is between 99 and 400.

**12.** The process for the production of a fiber composite material according to claim 10 or 11 for the production of fibers or textiles preimpregnated with polyurethane (polyurethane prepregs), by mixing the polyisocyanate composition (i) and the polyol composition (ii), bringing them into contact with oriented fibers (b) and subsequently partially curing them.

**13.** The process for the production of a fiber composite material according to claim 10 or 11 for the production of fibers or textiles preimpregnated with polyurethane, by mixing the polyisocyanate composition (i) and the polyol composition (ii), polymerizing them at a temperature below 80°C, and subsequently bringing them into contact with oriented fibers (b).

**14.** A fiber composite material obtained or obtainable by the process according to any of claims 10 to 13.

**15.** The use of a fiber composite material according to any of claims 1 to 9 or of a fiber composite material obtained or obtainable by the process according to any of claims 10 to 13 for the production of a pipe, in particular a conical pipe, a pipe connector, a pressure vessel, a storage tank, an insulator, a mast, a bar, a roller, a torsion shaft, a profile, a piece of sports equipment, a molded part, a cover, an automotive exterior part, a rope, a cable, an isogrid structure, or a semifinished textile product.

## Revendications

**1.** Matériau composite fibreux, comprenant les composants suivants :

a) un polyuréthane, obtenu ou pouvant être obtenu par transformation au moins des composants :

i) une composition de polyisocyanate ;
ii) une composition de polyol, comprenant au moins 15% en poids d'un alcool au moins trifonctionnel (ii.1), qui présente au moins deux groupes hydroxyle primaire, et moins de 10% en poids de polyols qui présentent un groupe terminal à base d'oxyde de propylène et/ou d'oxyde de butylène ;

b) des fibres, qui se trouvent au moins partiellement sous forme enrobée dans le polyuréthane compact ;

la composition de polyisocyanate (i) et la composition de polyol (ii) étant utilisées dans un rapport tel que l'indice d'isocyanate est situé entre 99 et 400.

**2.** Matériau composite fibreux selon la revendication 1, comprenant les composants suivants :

a) un polyuréthane, obtenu ou pouvant être obtenu par transformation au moins des composants :

i) une composition de polyisocyanate ;
ii) une composition de polyol, comprenant au moins 15% en poids du polyétherol éthoxylé (ii.1) ;

b) des fibres, qui se trouvent au moins partiellement sous forme enrobée dans le polyuréthane compact.

**3.** Matériau composite fibreux selon la revendication 2, le polyétherpolyol éthoxylé (ii.1) étant obtenu ou pouvant être obtenu par transformation :

ii.1.1) d'un initiateur de type polyol présentant une fonctionnalité de 3 à 6, de préférence de 3 ou 4, avec
ii.1.2) de l'oxyde d'éthylène,
en présence d'un catalyseur d'alcoxylation (ii.1.3) ;
ii.1.4) le cas échéant d'autres adjuvants et/ou additifs.

**4.** Matériau composite fibreux selon la revendication 2 ou 3, le polyétherpolyol éthoxylé (ii.1) ne présentant pas de groupes terminaux à base d'oxyde de propylène et/ou de groupes terminaux à base d'oxyde de butylène, de préférence présentant exclusivement des groupes terminaux à base d'oxyde d'éthylène et/ou le polyétherpolyol éthoxylé (ii.1) présentant exclusivement des groupes à base d'oxyde d'éthylène et ne contenant pas de groupes à base d'oxyde de propylène et/ou de groupes à base d'oxyde de butylène.

**5.** Matériau composite fibreux selon l'une des revendications 2 à 4, l'initiateur de type polyol (ii.1.1) du polyétherpolyol éthoxylé (ii.1) comprenant un triol présentant une fonctionnalité de 3, de préférence un triol de formule (I)

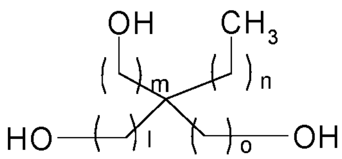

(I)

l, m, n et o représentant, à chaque fois indépendamment les uns des autres, un nombre entier de la plage de 1 à 6.

**6.** Matériau composite fibreux selon l'une des revendications 2 à 5, le polyétherpolyol éthoxylé (ii.1) n'étant produit que par la transformation d'un initiateur de type polyol (ii.1.1), en particulier d'un triol de formule (I) selon la revendication 3, et d'oxyde d'éthylène (ii.1.2) et aucun autre oxyde d'alkylène n'étant utilisé et/ou le polyétherpolyol éthoxylé (ii.1) n'étant produit que par la transformation d'un initiateur de type polyol (ii.1.1), en particulier du triol selon la formule (I), et d'oxyde d'éthylène (ii.1.2) et aucun autre initiateur, en particulier aucun initiateur à base d'amine, n'étant utilisé.

**7.** Matériau composite fibreux selon l'une des revendications 2 à 6, le polyétherpolyol éthoxylé (ii.1) étant à base d'un triol, de préférence d'un triol (ii.1.1) de formule (I) selon la revendication 3 ou 4 et présentant plus préférablement la formule (II),

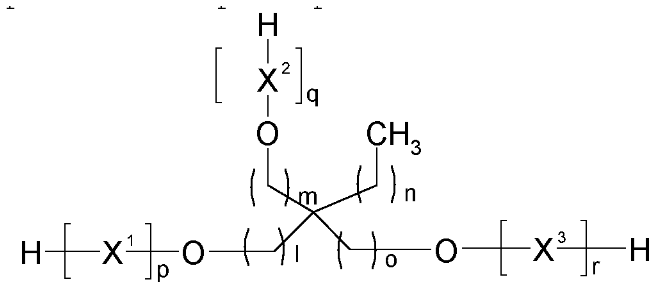

(II)

dans laquelle

l, m, n et o représentent, à chaque fois indépendamment les uns des autres, un nombre entier de la plage de 1 à 6, de préférence l, m, n et o valent tous 1 ;
p, q et r représentent, à chaque fois indépendamment les uns des autres, zéro ou un nombre entier de la plage de 1 à 6 ; et
$X^1$, $X^2$ et $X^3$ représentent à chaque fois un groupe $-CH_2-CH_2-O-$ .

**8.** Matériau composite fibreux selon l'une des revendications 1 à 7, la composition de polyol (ii) ne contenant pas de polyols qui présentent un groupe terminal d'oxyde de propylène ou un groupe terminal d'oxyde de butylène et/ou la composition de polyol (ii) contenant moins de 10% en poids de polyols qui présentent un groupe d'oxyde de propylène et/ou d'oxyde de butylène.

**9.** Matériau composite fibreux selon l'une des revendications 1 à 8, la composition de polyol (ii) ne contenant pas de polyols qui présentent un groupe d'oxyde de propylène ou un groupe d'oxyde de butylène et/ou la composition de polyol (ii) ne contenant pas de polyols à base d'oxyde de propylène et/ou d'oxyde de butylène.

**10.** Procédé pour la préparation d'un matériau composite fibreux, en particulier pour la préparation d'un matériau composite fibreux selon l'une des revendications 1 à 9, comprenant les étapes de :

A) mise à disposition d'une composition de polyisocyanate (i) ;
B) mise à disposition d'une composition de polyol (ii), comprenant au moins 15% en poids d'un alcool au moins trifonctionnel (ii.1), qui présente au moins deux groupes hydroxyle primaire, et moins de 10% en poids de polyols qui présentent un groupe terminal à base d'oxyde de propylène et/ou d'oxyde de butylène ;
C) mélange de la composition de polyisocyanate (i) et de la composition de polyol (ii) avec obtention d'un mélange réactionnel de polyuréthane (a') ;
D) réaction du mélange réactionnel de polyuréthane (a') en présence de fibres (b) en polyuréthane (a), les fibres (b) se trouvant au moins partiellement sous forme enrobée dans le mélange réactionnel de polyuréthane (a') ou, selon le cas, dans le polyuréthane (a), avec obtention d'un matériau composite fibreux

la composition de polyisocyanate (i) et la composition de polyol (ii) étant utilisées dans un rapport tel que l'indice d'isocyanate est situé entre 99 et 400.

**11.** Procédé pour la préparation d'un matériau composite fibreux selon la revendication 10, comprenant les étapes de :

A) mise à disposition d'une composition de polyisocyanate (i) ;
B) mise à disposition d'une composition de polyol (ii), comprenant au moins 15% en poids du polyétherpolyol éthoxylé (ii.1) et moins de 10% en poids de polyols qui présentent un groupe terminal à base d'oxyde de propylène et/ou d'oxyde de butylène ;
C) mélange de la composition de polyisocyanate (i) et de la composition de polyol (ii) avec obtention d'un mélange réactionnel de polyuréthane (a') ;
D) réaction du mélange réactionnel de polyuréthane (a') en présence de fibres (b) en polyuréthane (a), les fibres (b) se trouvant au moins partiellement sous forme enrobée dans le mélange réactionnel de polyuréthane (a') ou, selon le cas, dans le polyuréthane (a), avec obtention d'un matériau composite fibreux,

la composition de polyisocyanate (i) et la composition de polyol (ii) étant utilisées dans un rapport tel que l'indice d'isocyanate est situé entre 99 et 400.

**12.** Procédé pour la préparation d'un matériau composite fibreux selon la revendication 10 ou 11 pour la préparation de fibres ou de textiles préimprégné(e)s de polyuréthane (préimprégnés de polyuréthane) en ce que la composition de polyisocyanate (i) et la composition de polyol (ii) sont mélangées, mises en contact avec des fibres orientées (b) et ensuite partiellement durcies.

**13.** Procédé pour la préparation d'un matériau composite fibreux selon la revendication 10 ou 11 pour la préparation de fibres ou de textiles préimprégné(e)s de polyuréthane en ce que la composition de polyisocyanate (i) et la composition de polyol (ii) sont mélangées, polymérisées à une température inférieure à 80°C et ensuite mises en contact avec des fibres orientées (b).

**14.** Matériau composite fibreux obtenu ou pouvant être obtenu par le procédé selon l'une des revendications 10 à 13.

**15.** Utilisation d'un matériau composite fibreux selon l'une des revendications 1 à 9 ou d'un matériau composite fibreux obtenu ou pouvant être obtenu selon le procédé selon l'une des revendications 10 à 13 pour la fabrication d'un tuyau, en particulier d'un tuyau conique, d'une pièce de raccordement de tuyaux, d'un récipient sous pression, d'un réservoir de stockage, d'un isolateur, d'un poteau, d'une barre, d'un cylindre, d'un arbre de torsion, d'un profilé, d'un appareil de sport, d'une pièce moulée, d'un recouvrement, d'une pièce extérieure d'automobile, d'un câble, d'une corde, d'une structure "Isogrid" ou d'un produit textile semi-fini.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2016183073 A1
- WO 03085022 A1
- WO 2017100991 A1
- WO 2009115540 A2
- WO 2006034800 A1
- EP 0090444 B1
- WO 05090440 A1
- WO 03085022 A
- WO 18036943 A
- DE 102008021980 A1
- WO 2009115540 A1
- WO 19025439 A1
- WO 2014170252 A1
- WO 2018219756 A1


### In der Beschreibung aufgeführte Nicht-Patentliteratur


- **L. J.GIBSON ; M.F.ASHBY.** Cellular solids. Cambridge press, 1997, 54-56
- **M. LONESCU.** *Chemistry and Technology of Polyols, Rapra,* 2005, 67-75
- Kunststoffhandbuch, Band 7, Polyurethane. Carl Hanser Verlag, 1993
- **M. LONESCU.** Chemistry and Technology of Polyols. *Rapra,* 2005
- **M. LONESCU.** Chemistry and Technology of Polyols. *Rapra,* 2005, 67-75
- **VON HENRY LEE ; KRIS NEVILLE.** Handbook of Epoxy resins. McGraw-Hill Book Company, 1967
- Kunststoffhandbuch, Band 7, Polyurethane. Carl Hanser Verlag, 1993, vol. 3
- **THOMAS BROCK ; MICHAEL GROTEKLAES ; PETER MISCHKE.** Lehrbuch der Lacktechnologie. Vincentz Verlag, 2000
- **THOMAS BROCK ; MICHAEL GROTEKLAES ; PETER MISCHKE.** Lehrbuch der Lacktechnologie. Vincentz Verlag, 2000, vol. 2, 169
- **L. J. GIBSON ; M.F. ASHBY.** Cellular solids. Cambridge press, 1997, vol. 2, 54-56